# EUROPEAN PATENT APPLICATION

(11) **EP 4 576 305 A1**
(43) Date of publication of application: **25.06.2025**
(21) Application number: 23892092.0
(22) Date of filing: 20.11.2023
(51) Int. Cl.: H01M 10/0567, H01M 10/42, H01M 10/0525, H01M 4/505, H01M 4/525, H01M 10/52, H01M 10/052, H01M 4/02

(54) **NON-AQUEOUS ELECTROLYTE FOR LITHIUM SECONDARY BATTERY, AND LITHIUM SECONDARY BATTERY COMPRISING SAME**

(30) Priority: 18.11.2022 KR 20220155698; 18.11.2022 KR 20220155700; 18.11.2022 KR 20220155701; 14.03.2023 KR 20230033302
(71) Applicant: LG CHEM, LTD., Seoul 07336 (KR)
(72) Inventor: SHIN, Sung Ho, Daejeon 34122 (KR); KIM, Jae Yoon, Daejeon 34122 (KR); OH, Mi Yeon, Daejeon 34122 (KR); LEE, Won Kyun, Daejeon 34122 (KR); YOON, Jeong Ae, Daejeon 34122 (KR); KIM, Kyoung Hoon, Daejeon 34122 (KR); KIM, Jung Keun, Daejeon 34122 (KR); KIM, Ki Cheol, Daejeon 34122 (KR); NOH, Chan Woo, Daejeon 34122 (KR); CHOI, Hang Seok, Daejeon 34122 (KR); CHUNG, Se Young, Daejeon 34122 (KR)
(74) Representative: Plasseraud IP
(86) International application number: PCT/KR2023/018680
(87) International publication number: WO 2024/107030

(57) **Abstract**

The present invention relates to a non-aqueous electrolyte for a lithium secondary battery, which includes a first additive including a chromone-based compound, and a lithium secondary battery including the same.

## Description

### [Technical Field]

### Cross-Reference to Related Application

This application claims priority to and the benefit of Korean Patent Application No. 10-2022-0155698, No. 10-2022-0155700, and No. 10-2022-0155701, filed on November 18, 2022, and Korean Patent Application No. 10-2023-0033302, filed on March 14, 2023, the disclosures of which are incorporated herein by reference in their entireties.

### Technical Field

The present invention relates to a non-aqueous electrolyte for a lithium secondary battery and a lithium secondary battery including the same.

### [Background Art]

Recently, the application area of lithium secondary batteries has rapidly expanded to not only the supply of power to electrical devices, communication devices and electronic devices such as computers but also the storage and supply of power to large-scale devices such as automobiles and power storage devices. Accordingly, there is an increasing demand for secondary batteries with high capacity, high output and high stability. Also, the importance of high capacity, high output and long-term lifespan characteristics is increased in lithium secondary batteries for automotive use.

Meanwhile, when lithium secondary batteries are exposed to repeated charging and discharging and a high temperature environment, electrolyte decomposition worsens, and thus gas is generated within the cell. Recently, high-voltage positive electrodes used in lithium secondary batteries have caused decomposition of specific solvents, and thus gas generation becomes more severe.

In addition, in the case of high-capacity positive electrodes, the lattice oxygen stability of a positive electrode active material is low under high-pressure operating conditions, and thus the generation of oxygen gas from the positive electrode active material and chain decomposition occur. Accordingly, research is being conducted on an improvement in the performance, lifespan and stability of lithium secondary batteries by solving this gas problem.

### [Related-Art Documents]

### [Patent Documents]

(Patent Document 1) KR2006-0037592A

### [Disclosure]

### [Technical Problem]

The present invention is directed to providing a non-aqueous electrolyte for a lithium secondary battery, which is capable of minimizing problems resulting from oxygen gas by capturing oxygen gas generated from a positive electrode active material, and improving the lifespan and stability of a lithium secondary battery by suppressing the decomposition of a non-aqueous electrolyte for a lithium secondary battery, and a lithium secondary battery including the same.

### [Technical Solution]

1) The present invention provides a non-aqueous electrolyte for a lithium secondary battery, which includes a first additive including a compound represented by the following Chemical Formula 1: 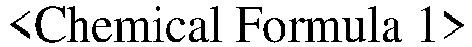 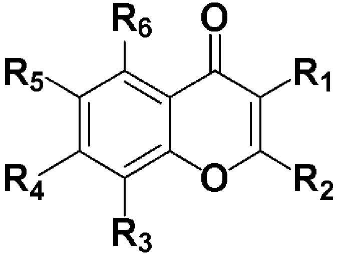 in Chemical Formula 1,
   R₁ and R₃ to R₆ are the same or different and each independently represent hydrogen, a halogen, *-L₁-C≡N, *-L₂-C(=O)R₇, *-L₃-NR₈R₉, *-L₄-OR₁₀, a C₁ to C₂₀ alkyl group, a C₂ to C₂₀ alkynyl group or a C₆ to C₂₀ aryl group,
   R₂ represents hydrogen, a halogen, *-L₅-C≡N, *-L₆-C(=O)R₁₁, *-L₇-NR₁₂R₁₃, *-L₈-OR₁₄, a C₁ to C₂₀ alkyl group or a C₂ to C₂₀ alkynyl group,
   R₇ to R₁₄ are the same or different and each independently represent hydrogen, oxygen, *-L₉-OR₁₅, a C₁ to C₂₀ alkyl group, a C₂ to C₂₀ alkynyl group or a C₆ to C₂₀ aryl group,
   R₁₅ represents hydrogen, a C₁ to C₂₀ alkyl group, a C₂ to C₂₀ alkynyl group or a C₆ to C₂₀ aryl group, and
   L₁ to L₉ are the same or different and each independently represent a direct bond or a C₁ to C₁₀ alkylene group,
   provided that R₁ to R₆ are not hydrogen at the same time; or one or more of R₁ to R₆ are halogens, and the remainder of R₁ to R₆ are not hydrogen at the same time.
2) According to 1), the present invention may provide the non-aqueous electrolyte for a lithium secondary battery, in which the compound represented by Chemical Formula 1 includes one or more of compounds represented by the following Chemical Formulas 1-1 to 1-22: 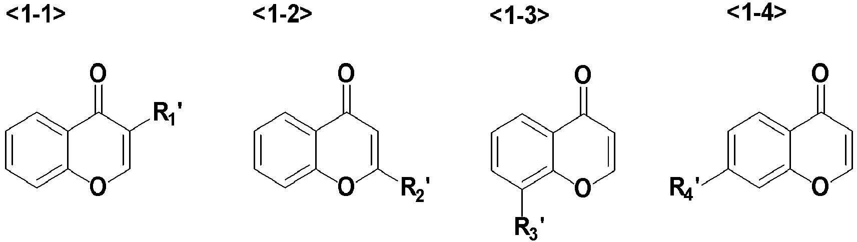 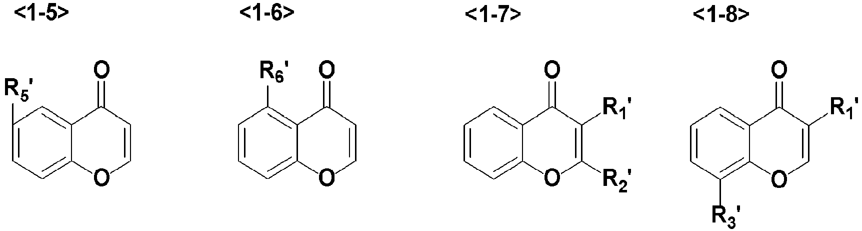 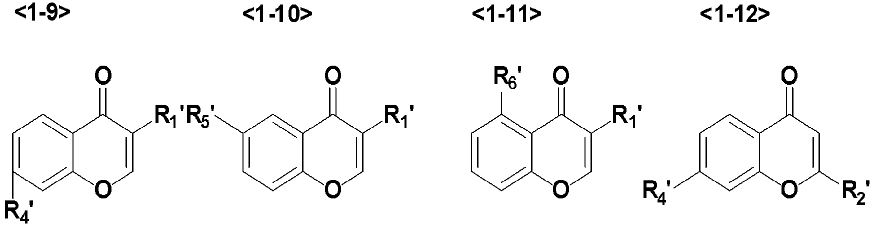 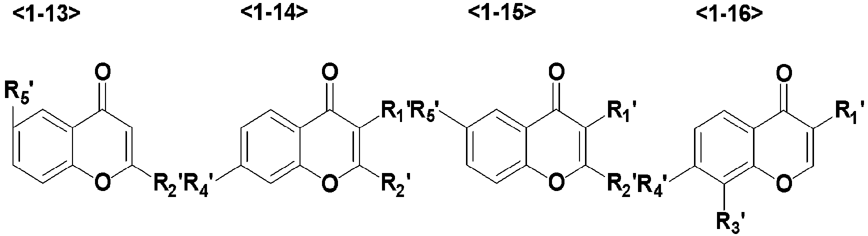 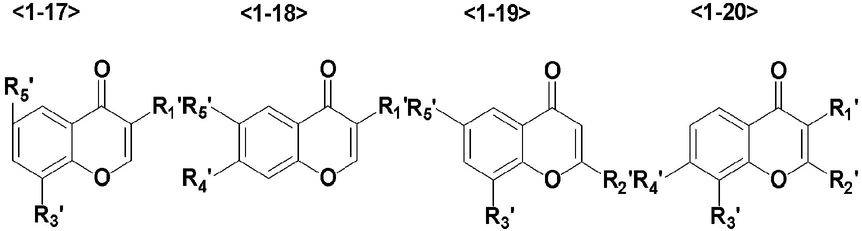 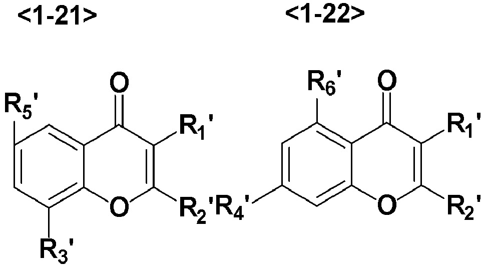 in Chemical Formulas 1-1 to 1-22,
   R₁' and R₃' to R₆' are the same or different and each independently represent a halogen, *-L₁'-C≡N, *-L₂'-C(=O)R₇', *-L₃'-NR₈'R₉', *-L₄'-OR₁₀', a C₁ to C₂₀ alkyl group, a C₂ to C₂₀ alkynyl group or a C₆ to C₂₀ aryl group,
   R₂' represents a halogen, *-L₅'-C≡N, *-L₆'-C(=O)R₁₁', *-L₇'-NR₁₂'R₁₃', *-L₈'-OR₁₄', a C₁ to C₂₀ alkyl group or a C₂ to C₂₀ alkynyl group,
   R₇' to R₁₄' are the same or different and each independently represent hydrogen, oxygen, *-L₉'-OR₁₅', a C₁ to C₂₀ alkyl group, a C₂ to C₂₀ alkynyl group or a C₆ to C₂₀ aryl group,
   R₁₅' represents hydrogen, a C₁ to C₂₀ alkyl group, a C₂ to C₂₀ alkynyl group or a C₆ to C₂₀ aryl group, and
   L₁' to L₉' are the same or different and each independently represent a direct bond or a C₁ to C₁₀ alkylene group.
3) According to 1), the present invention may provide the non-aqueous electrolyte for a lithium secondary battery, in which the compound represented by Chemical Formula 1 includes one or more of compounds represented by the following chemical formulas: 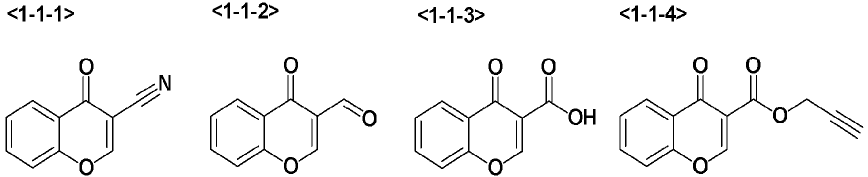 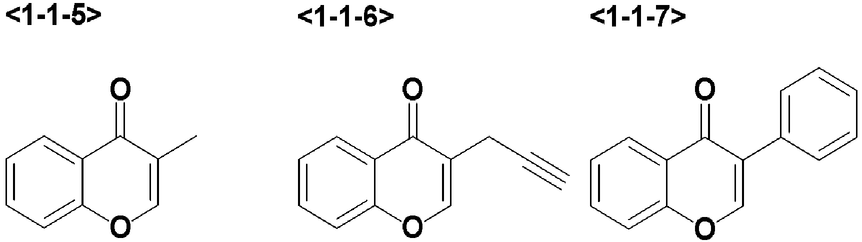 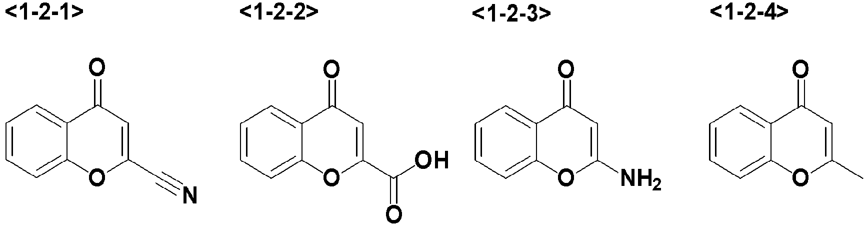 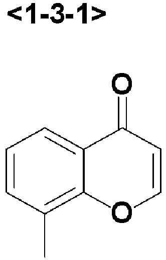 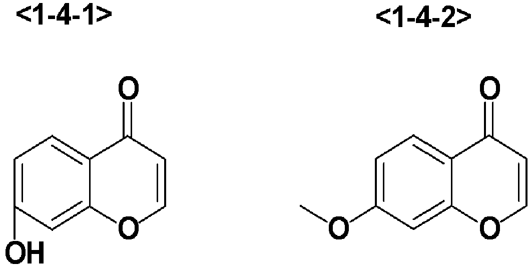 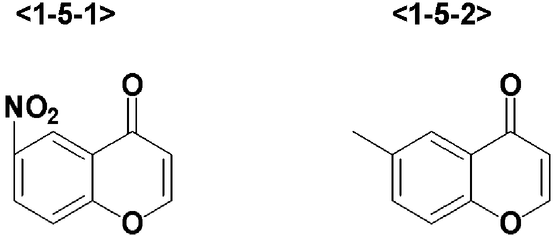 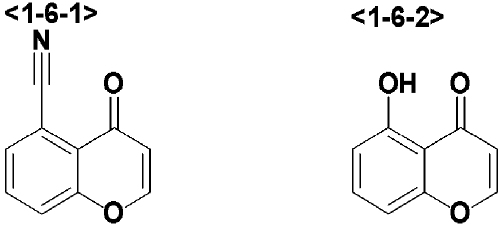 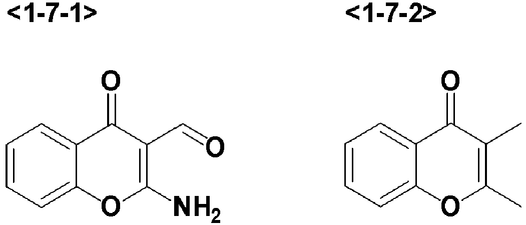 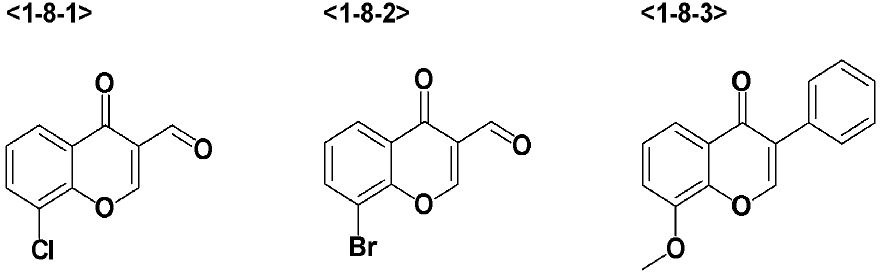 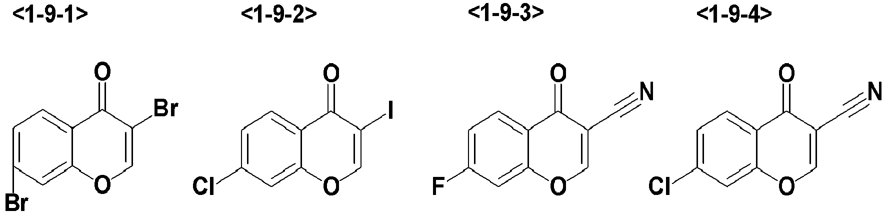 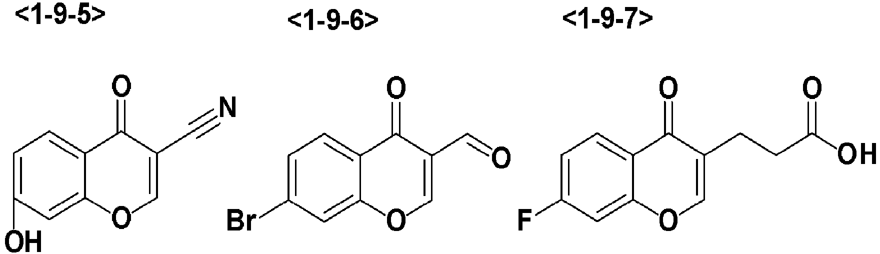 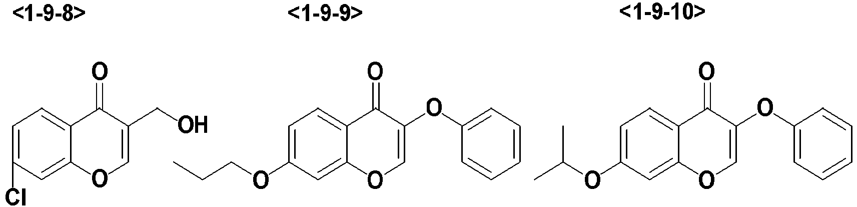 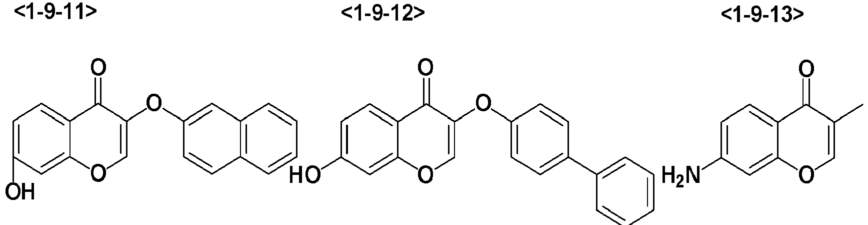 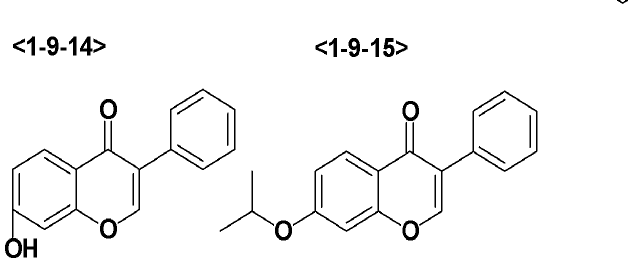 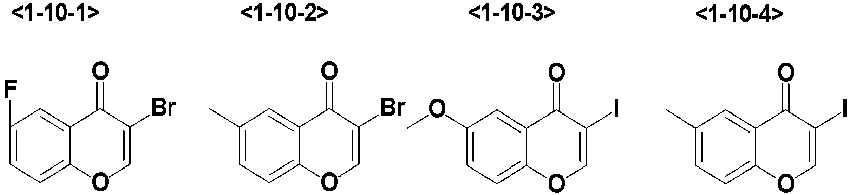 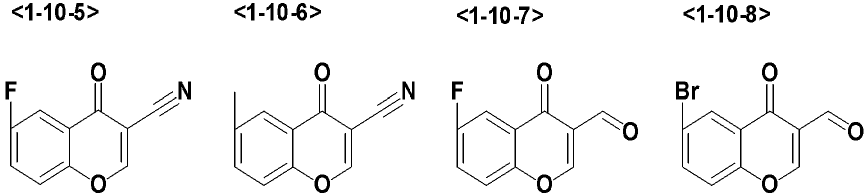 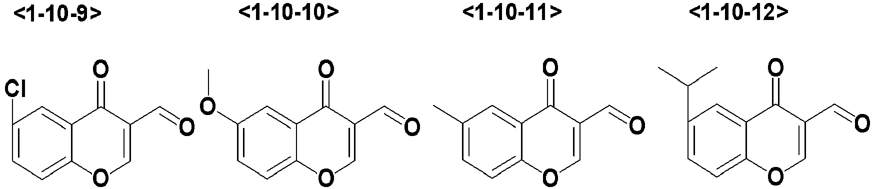 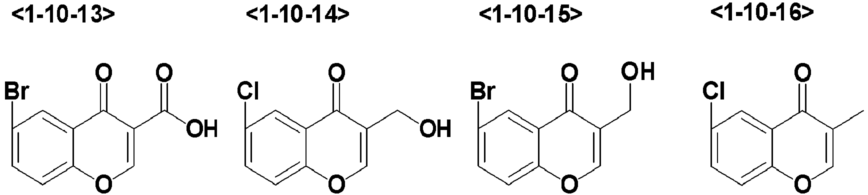 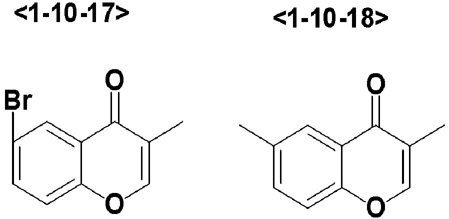 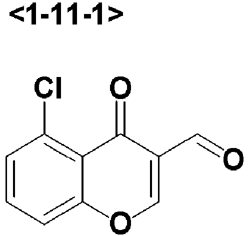 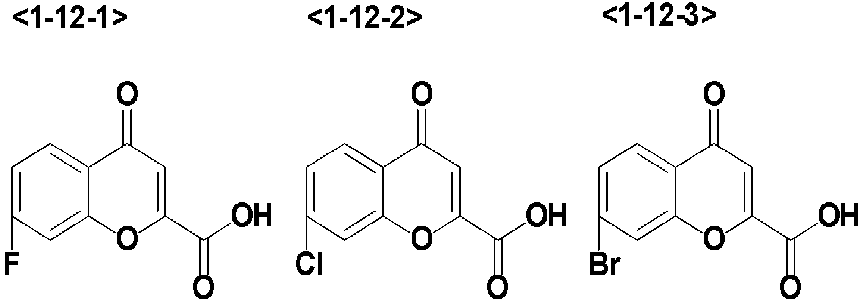 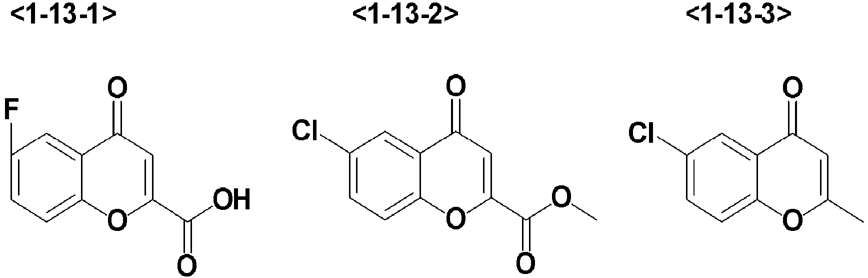 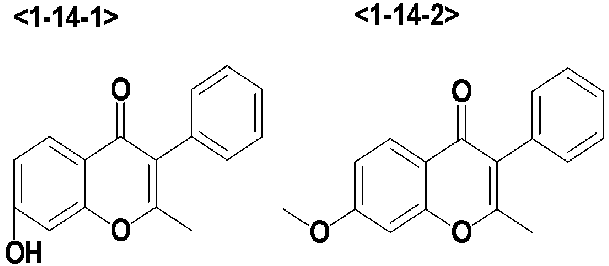 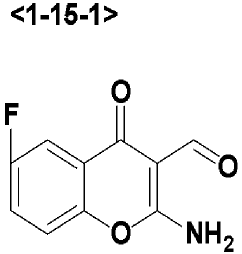 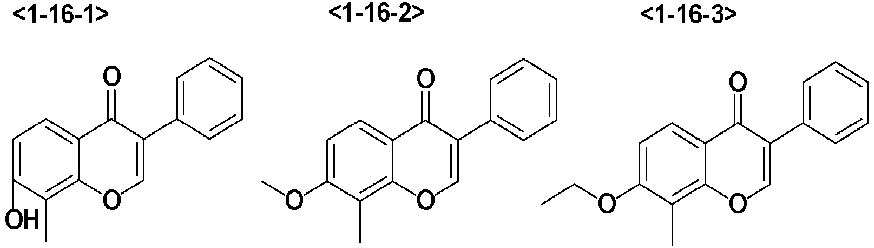 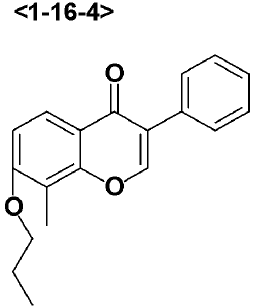 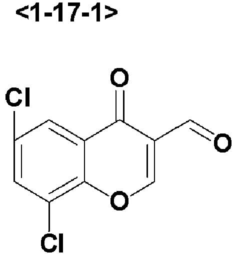 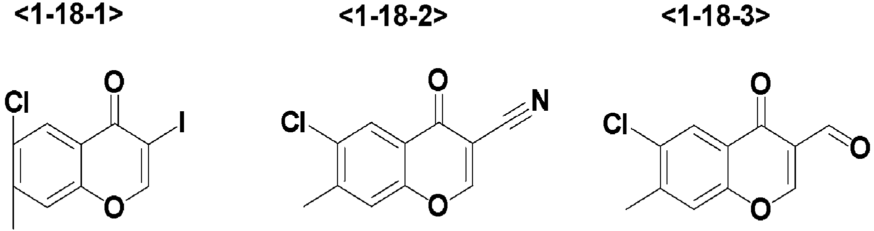 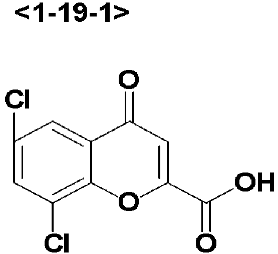 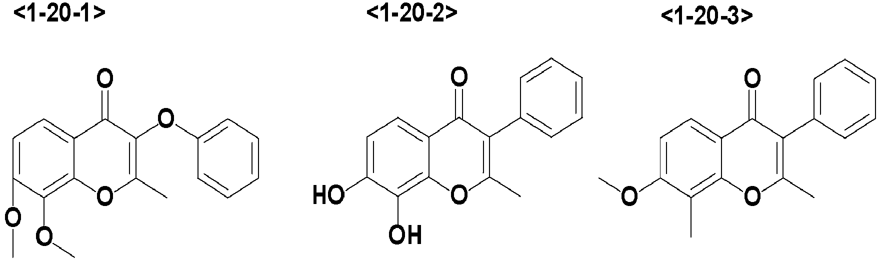 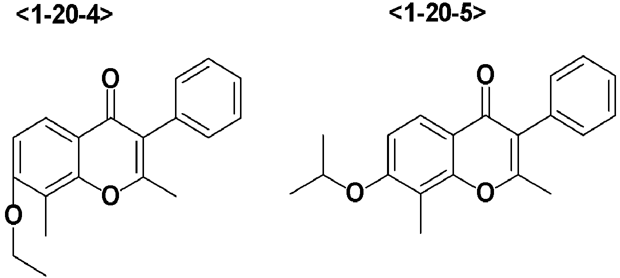 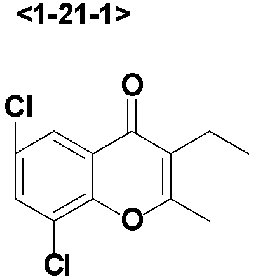 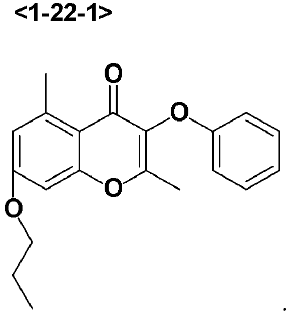
4) According to any one of 1) to 3), the present invention may provide the non-aqueous electrolyte for a lithium secondary battery, in which the first additive is included in an amount of 0.01 to 10.00 parts by weight with respect to 100 parts by weight of the non-aqueous electrolyte for a lithium secondary battery.
5) According to any one of 1) to 4), the present invention may provide the non-aqueous electrolyte for a lithium secondary battery, which includes a second additive including one or more of compounds represented by the following Chemical Formulas 2 to 4: 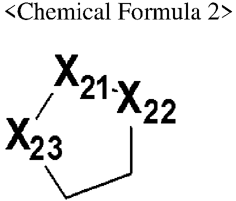 in Chemical Formula 2,
   X₂₁ represents *-S(=O)-* or *-S(=O)₂-*, and
   X₂₂ and X₂₃ are the same or different and each independently represent a direct bond, *-O-* or a C₁ to C₁₀ alkylene group. 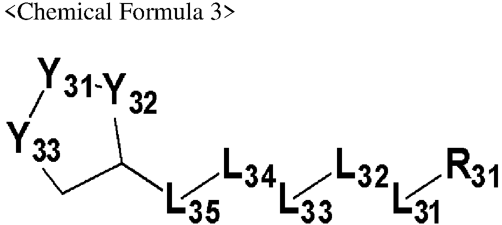
   in Chemical Formula 3,
   Y₃₁ and L₃₃ are the same or different and each independently represent *-S(=O)-* or *-S(=O)₂-*,
   Y₃₂, Y₃₃, L₃₁, L₃₂, L₃₄ and L₃₅ are the same or different and each independently represent a direct bond, *-O-* or a C₁ to C₁₀ alkylene group, and
   R₃₁ represents hydrogen, a C₁ to C₁₀ alkyl group, a C₂ to C₁₀ alkenylene group or a C₂ to C₁₀ alkynylene group. 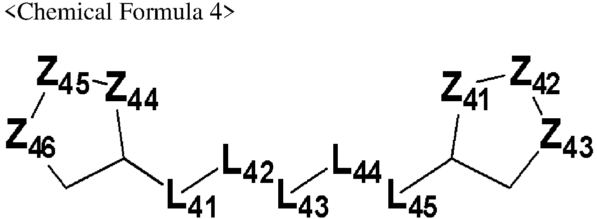
   in Chemical Formula 4,
   Z₄₂, Z₄₅ and L₄₃ are the same or different and each independently represent *-S(=O)-* or *-S(=O)₂-*, and
   Z₄₁, Z₄₃, Z₄₄, Z₄₆, L₄₁, L₄₂, L₄₄ and L₄₅ are the same or different and each independently represent a direct bond, *-O-* or a C₁ to C₁₀ alkylene group.
6) According to 5), the present invention may provide the non-aqueous electrolyte for a lithium secondary battery, in which the compound represented by Chemical Formula 2 includes one or more of compounds represented by the following Chemical Formulas 2-1 to 2-4, the compound represented by Chemical Formula 3 includes one or more of compounds represented by the following Chemical Formulas 3-1 to 3-3, and the compound represented by Chemical Formula 4 includes one or more of compounds represented by the following Chemical Formulas 4-1 to 4-3: 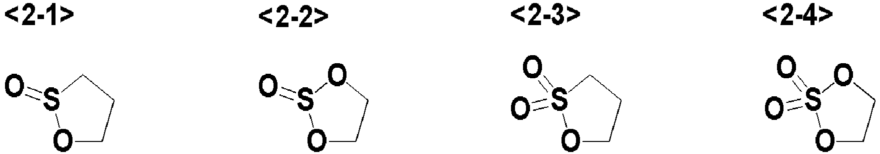 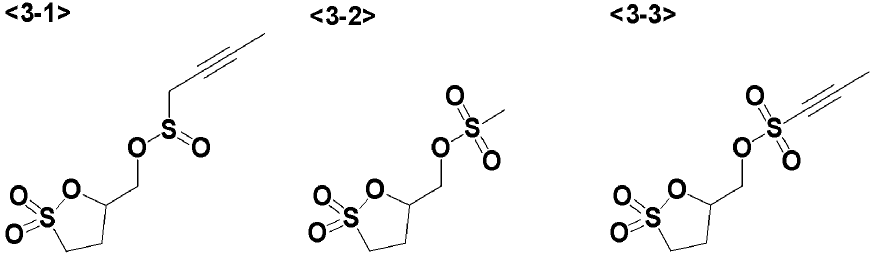 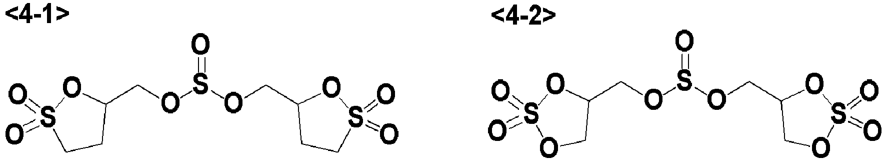 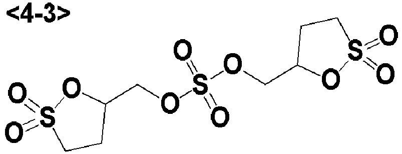
7) According to 5) or 6), the present invention may provide the non-aqueous electrolyte for a lithium secondary battery, in which the second additive is included in an amount of 0.01 to 5.00 parts by weight with respect to 100 parts by weight of the non-aqueous electrolyte for a lithium secondary battery.
8) According to any one of 1) to 7), the present invention provides the non-aqueous electrolyte for a lithium secondary battery, in which the non-aqueous electrolyte for a lithium secondary battery includes one or more of a lithium salt and an organic solvent.
9) Another aspect of the present invention may provide a lithium secondary battery which includes: the non-aqueous electrolyte for a lithium secondary battery according to any one of 1) to 8); a positive electrode including a positive electrode active material; a negative electrode including a negative electrode active material; and a separator interposed between the positive electrode and the negative electrode.
10) According to 9), the present invention may provide the lithium secondary battery in which the positive electrode active material includes one or more of an over-lithiated layered oxide represented by the following Chemical Formula 5 and an NCM-based lithium composite transition metal oxide represented by Chemical Formula 6:

   <Chemical Formula 5> xLi₂MnO₃·(1-x)Liₐ₁Ni_{b1}Co_{c1}Mn_{d1}M¹ₑ₁O₂

   in Chemical Formula 5,
   0<x<1, 0≤a1≤2, 0≤b1≤1, 0≤c1≤1, 0≤d1≤1, 0≤e1≤1 and al+bl+cl+dl+el=2 are satisfied, and
   M¹ includes one or more of Na, K, Mg, Al, Fe, Cr, Y, Sn, Ti, B, P, Zr, Ru, Nb, W, Ba, Sr, La, Ga, Gd, Sm, Ca, Ce, Ta, Mo, Sc, V, Zn, Cu, In, S, Bi, Rh, Pd, Ag, Cd and Tc,

      <Chemical Formula 6> Liₐ₂Ni_{b2}Co_{c2}Mn_{d2}M²ₑ₂O₂
   in Chemical Formula 6,
   0.9≤a2≤1.1, 0.7≤b2<1, 0≤c2<1, 0<d2<1, 0≤e2<1 and b2+c2+d2+e2=1 are satisfied, and
   M² includes one or more of Na, K, Mg, Al, Fe, Cr, Y, Sn, Ti, B, P, Zr, Ru, Nb, W, Ba, Sr, La, Ga, Gd, Sm, Ca, Ce, Ta, Mo, Sc, V, Zn, Cu, In, S, Bi, Rh, Pd, Ag, Cd and Tc.

### [Advantageous Effects]

A non-aqueous electrolyte for a lithium secondary battery and a lithium secondary battery according to the present invention can minimize problems resulting from oxygen gas by capturing oxygen gas generated at a positive electrode and improve the performance, lifespan and stability of a lithium secondary battery by suppressing the decomposition of a non-aqueous electrolyte for a lithium secondary battery.

### [Modes of the Invention]

Terms and words used in this specification and the claims should not be interpreted as limited to commonly used meanings or meanings in dictionaries and should be interpreted with meanings and concepts which are consistent with the technological scope of the invention based on the principle that the inventors can appropriately define concepts of terms in order to describe the invention in the best way.

Terms used in the present invention have been used only for the purpose of describing particular exemplary embodiments and are not intended to limit the present invention. In the present specification, singular expressions include plural expressions unless the context clearly indicates otherwise. It will be further understood that the terms "comprises," "comprising," "includes," "including," "has" and/or "having," when used herein, specify the presence of stated features, numbers, steps, operations, elements, components and/or groups thereof, but do not preclude the presence or addition of one or more other features, numbers, steps, operations, elements, components and/or groups thereof.

In this specification, "on" means not only the case where a certain component is formed directly on another component, but also the case where a third component is interposed between these components.

In the present invention, an alkyl group refers to a linear or cyclic alkyl group, and although there is no particular limitation on the number of carbon atoms, the alkyl group may be a C₁ to C₂₀ alkyl group, preferably a C₁ to C₁₅ alkyl group, more preferably a C₁ to C₁₀ alkyl group, and most preferably a C₁ to C₅ alkyl group. The alkyl group may be further substituted with other substituents. Specific examples of the alkyl group include a methyl group, an ethyl group, an n-propyl group, an isopropyl group, an n-butyl group, an isobutyl group, a tert-butyl group, a sec-butyl group, a 1-methyl-butyl group, a 1-ethyl-butyl group, an n-pentyl group, an isopentyl group, a neopentyl group, a tert-pentyl group, an n-hexyl group, an 1-methylpentyl group, a 2-methylpentyl group, a 4-methyl-2-pentyl group, a 3,3-dimethylbutyl group, a 2-ethylbutyl group, an n-heptyl group, a 1-methylhexyl group, a cyclopentyl methyl group, a cyclohexyl methyl group, an n-octyl group, a tert-octyl group, an 1-methylheptyl group, a 2-ethylhexyl group, a 2-propylpentyl group, an n-nonyl group, a 2,2-dimethylheptyl group, an 1-ethyl-propyl group, an 1,1-dimethyl-propyl group, an isohexyl group, a 2-methylpentyl group, a 4-methylhexyl group, a 5-methylhexyl group and the like, but the present invention is not limited thereto.

In the present invention, an alkylene group is the same as defined in the description of the alkyl group, except that the alkylene group is a divalent group.

In the present invention, an alkenyl group refers to a linear or cyclic alkenyl group, and although there is no particular limitation on the number of carbon atoms, the alkenyl group may be a C₂ to C₂₀ alkenyl group, preferably a C₂ to C₁₅ alkenyl group, more preferably a C₂ to C₁₀ alkenyl group, and most preferably a C₂ to C₅ alkenyl group. The alkenyl group may be further substituted with other substituents. Examples of the alkenyl group include vinyl, 1-propenyl, isopropenyl, 1-butenyl, 2-butenyl, 3-butenyl, 1-pentenyl, 2-pentenyl, 3-pentenyl, 3-methyl-1-butenyl, 1,3-butadienyl, allyl, 1-phenylvinyl-1-yl, 2-phenylvinyl-1-yl, 2,2-diphenylvinyl-1-yl, 2-phenyl-2-(naphthyl-1-yl)vinyl-1-yl, 2,2-bis(diphenyl-1-yl)vinyl-1-yl, stylbenyl groups, styrenyl groups and the like, but the present invention is not limited thereto.

In the present invention, an alkenylene group is the same as defined in the description of the alkenyl group, except that the alkenylene group is a divalent group.

In the present invention, an alkynyl group refers to a linear or cyclic alkynyl group, and although there is no particular limitation on the number of carbon atoms, the alkynyl group may be a C₂ to C₂₀ alkynyl group, preferably a C₂ to C₁₅ alkynyl group, more preferably a C₂ to C₁₀ alkynyl group, and most preferably a C₂ to Cs alkynyl group. Examples of the alkynyl group include ethynyl, propynyl, 2-methyl-2-propynyl, 2-butynyl, 2-pentynyl groups and the like, but the present invention is not limited thereto.

In the present invention, an alkynylene group is the same as defined in the description of the alkynyl group, except that the alkynylene group is a divalent group.

In the present invention, an aryl group refers to a monocyclic or polycyclic aryl group, and although there is no particular limitation on the number of carbon atoms, the aryl group may be a C₆ to C₂₀ aryl group, preferably a C₆ to C₁₈ aryl group, and more preferably a C₂ to C₁₂ aryl group. The aryl group may be further substituted with other substituents. Here, the polycyclic aryl group refers to an aryl group directly connected to or condensed with another ring group. Specific examples of the aryl group include a phenyl group, a biphenyl group, a triphenyl group, a naphthyl group, an anthryl group and the like, but the present invention is not limited thereto.

In the present invention, an arylene group is the same as defined in the description of the aryl group, except that the arylene group is a divalent group.

In the present invention, a halogen may include one or more of F, Cl, Br, I and At.

In the present invention, "*" refers to a binding site.

### 1. Non-aqueous electrolyte for lithium secondary battery

A non-aqueous electrolyte for a lithium secondary battery according to one aspect of the present invention includes a first additive including a compound represented by the following Chemical Formula 1: 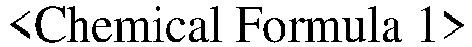 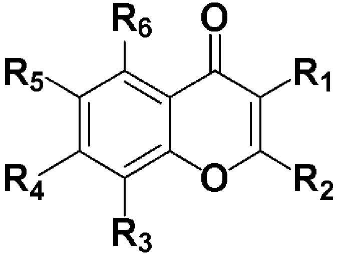 in Chemical Formula 1,
R₁ and R₃ to R₆ are the same or different and each independently represent hydrogen, a halogen, *-L₁-C≡N, *-L₂-C(=O)R₇, *-L₃-NR₈R₉, *-L₄-OR₁₀, a C₁ to C₂₀ alkyl group, a C₂ to C₂₀ alkynyl group or a C₆ to C₂₀ aryl group,
R₂ represents hydrogen, a halogen, *-L₅-C≡N, *-L₆-C(=O)R₁₁, *-L₇-NR₁₂R₁₃, *-L₈-OR₁₄, a C₁ to C₂₀ alkyl group or a C₂ to C₂₀ alkynyl group,
R₇ to R₁₄ are the same or different and each independently represent hydrogen, *-L₉-OR₁₅, a C₁ to C₂₀ alkyl group, a C₂ to C₂₀ alkynyl group or a C₆ to C₂₀ aryl group,
R₁₅ represents hydrogen, a C₁ to C₂₀ alkyl group, a C₂ to C₂₀ alkynyl group or a C₆ to C₂₀ aryl group, and
L₁ to L₉ are the same or different and each independently represent a direct bond or a C₁ to C₁₀ alkylene group,
provided that R₁ to R₆ are not hydrogen at the same time; or one or more of R₁ to R₆ are halogens, and the remainder of R₁ to R₆ are not hydrogen at the same time.

The compound represented by Chemical Formula 1 may minimize problems resulting from oxygen gas by including a chromone-based structure that captures oxygen gas generated at a positive electrode. Also, the compound represented by Chemical Formula 1 has high bonding strength to reactive oxygen species by including an electron withdrawing group as a substituent, and thus a gas generation amount may be reduced.

Meanwhile, when R₂ is an aryl group, the molecular structure is stabilized by the pi bond, and thus the power to capture reactive oxygen species decreases, and the amount of gas generated as a by-product relatively increases. Also, when any one of R₁ to R₆ is a halogen and the remainder are hydrogen, side reactions may occur to produce halous acids, and the performance of a lithium secondary battery may be degraded due to the halous acid.

When one or more of R₁ to R₆ are halogens and the remainder of R₁ to R₆ are not hydrogen at the same time, the bonding strength to reactive oxygen species is increased due to the electron withdrawing effect of the halogen. Also, since the compound represented by Chemical Formula 1 includes an electron withdrawing group as a substituent, the remaining substituents may stabilize electrons produced upon bonding to reactive oxygen species. As a result, the production of halous acid may be minimized to improve the performance of a lithium secondary battery.

When one of R₁ to R₆ is a halogen and the remainder of R₁ to R₆ are hydrogen at the same time, side reactions may occur to produce halous acids, and the performance of a lithium secondary battery may be degraded due to the halous acid.

In addition, for reactive oxygen species to be added while maintaining the original structure of the compound, unsaturated hydrocarbons need to be present rather than saturated hydrocarbons. The addition of reactive oxygen species occurs in the direction of a double bond which is unsaturated in the Michael type. However, since compounds with no double bond in a part of the core, such as chromanon, do not have an active site that is able to react with reactive oxygen species, an oxygen capture ability is substantially degraded. As a result, it may be difficult to implement an oxygen gas suppression effect.

The compound represented by Chemical Formula 1 may include one or more of compounds represented by the following Chemical Formulas 1-1 to 1-22: 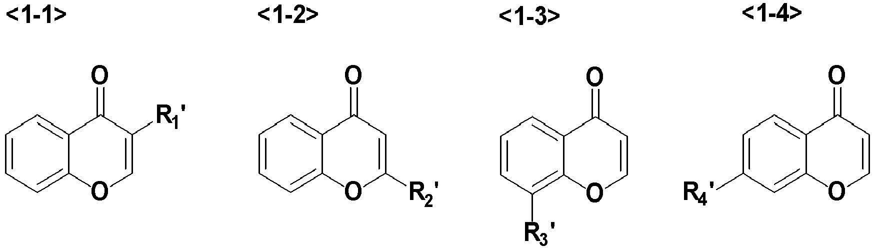 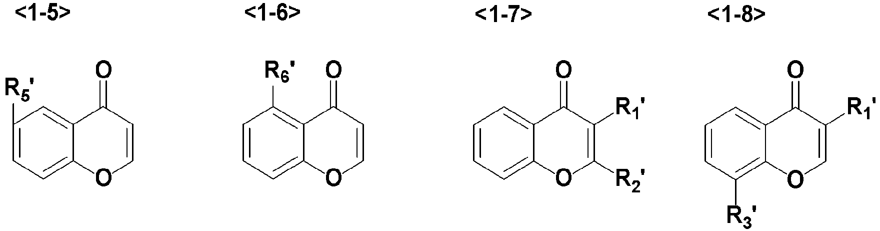 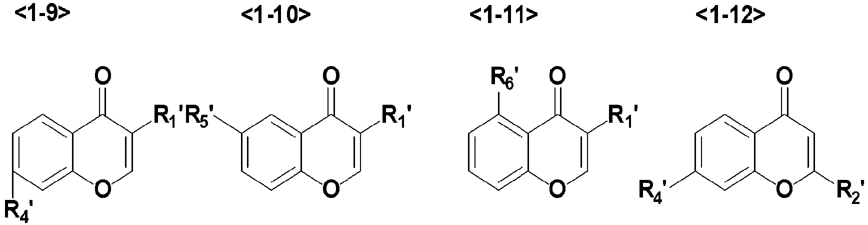 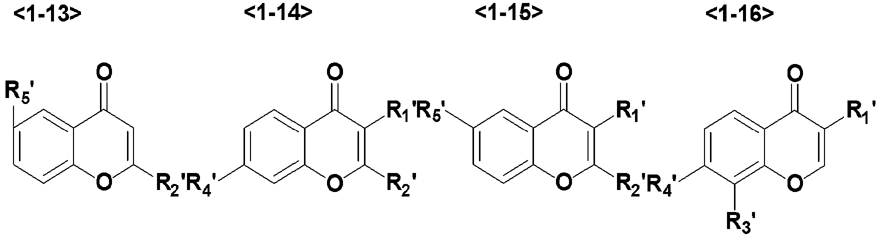 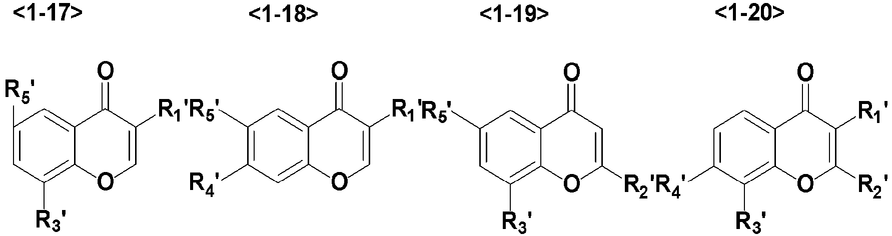 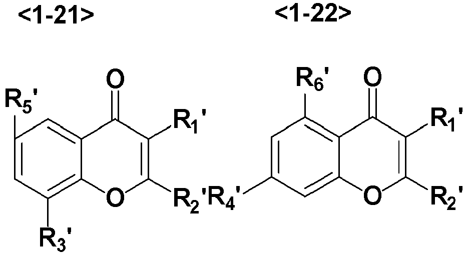 in Chemical Formulas 1-1 to 1-22,
R₁' and R₃' to R₆' are the same or different and each independently represent a halogen, *-L₁'-C≡N, *-L₂'-C(=O)R₇', *-L₃'-NR₈'R₉', *-L₄'-OR₁₀', a C₁ to C₂₀ alkyl group, a C₂ to C₂₀ alkynyl group or a C₆ to C₂₀ aryl group,
R₂' represents a halogen, *-L₅'-C≡N, *-L₆'-C(=O)R₁₁', *-L₇'-NR₁₂'R₁₃', *-L₈'-OR₁₄', a C₁ to C₂₀ alkyl group or a C₂ to C₂₀ alkynyl group,
R₇' to R₁₄' are the same or different and each independently represent hydrogen, oxygen, *-L₉'-OR₁₅', a C₁ to C₂₀ alkyl group, a C₂ to C₂₀ alkynyl group or a C₆ to C₂₀ aryl group,
R₁₅' represents hydrogen, a C₁ to C₂₀ alkyl group, a C₂ to C₂₀ alkynyl group or a C₆ to C₂₀ aryl group, and
L₁' to L₉' are the same or different and each independently represent a direct bond or a C₁ to C₁₀ alkyl group.

Only when an electron withdrawing group is present as a substituent, the positive charge of carbon that is able to bind to reactive oxygen species may increase, and as a result, the bonding strength to reactive oxygen species may increase. In order to maximize this effect, it is preferable that R₁ to R₆ are the same or different and each independently represent a halogen, *-C≡N, *-C(=O)R₇, *-NR₈R₉, *-OR₁₀, a C_{1 to} C₁₀ alkyl group or a C₆ to C₁₂ aryl group.

The compound represented by Chemical Formula 1 may include one or more of compounds represented by the following chemical formulas:

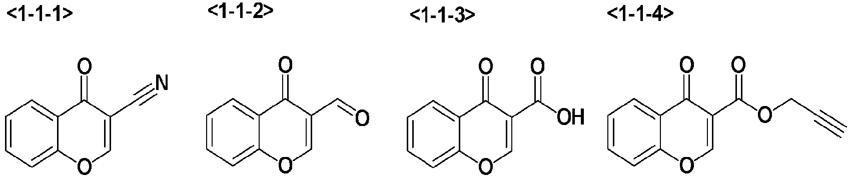

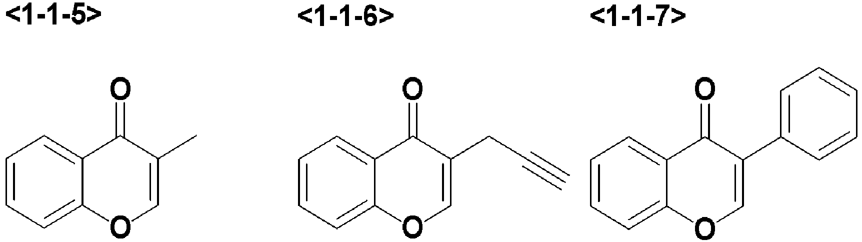

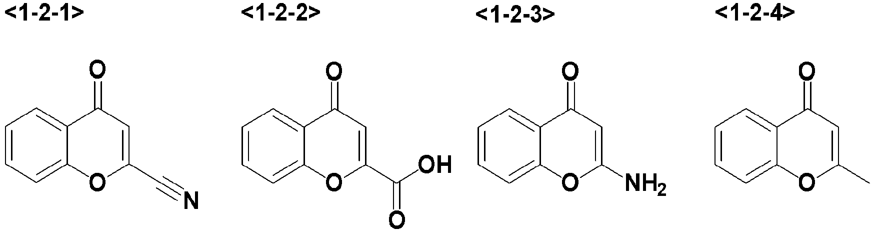

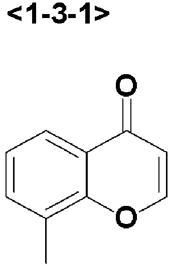

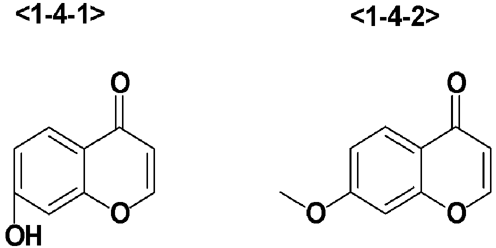

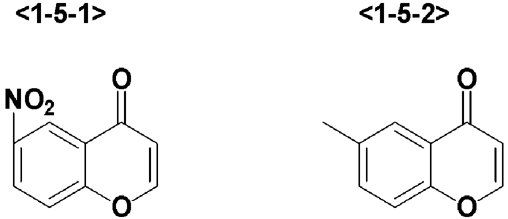

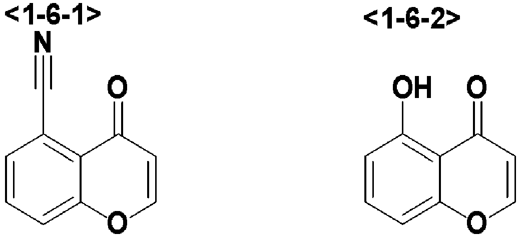

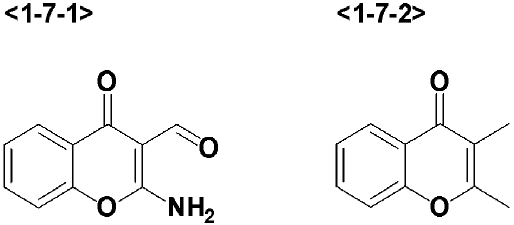

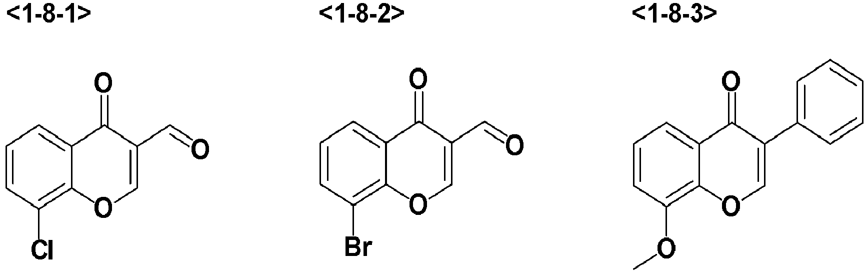

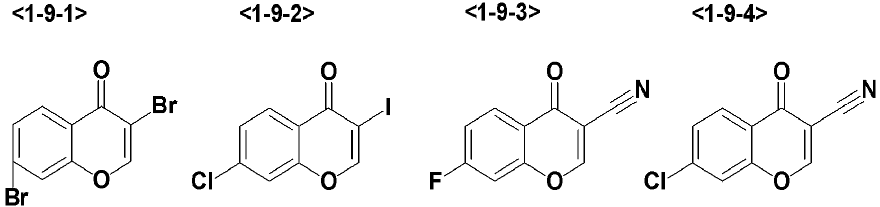

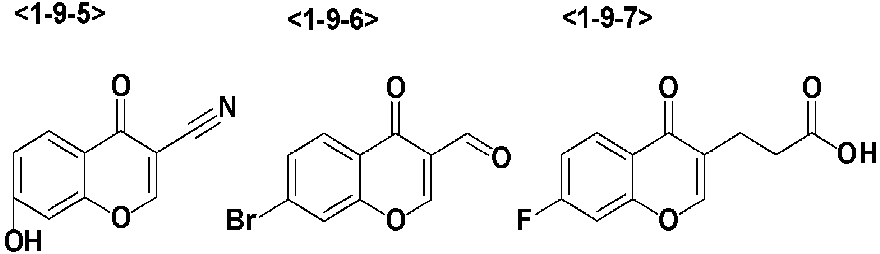

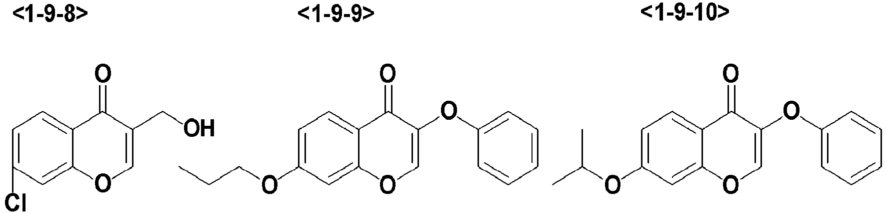

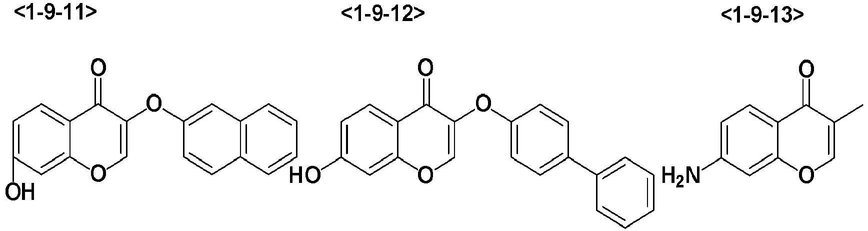

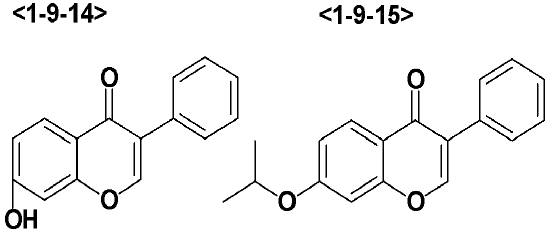

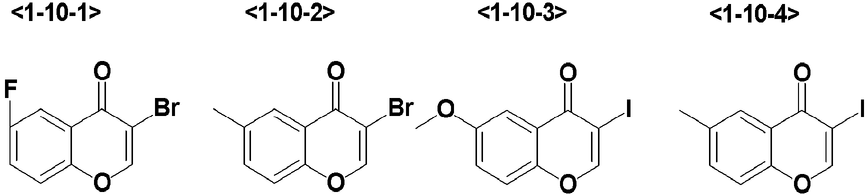

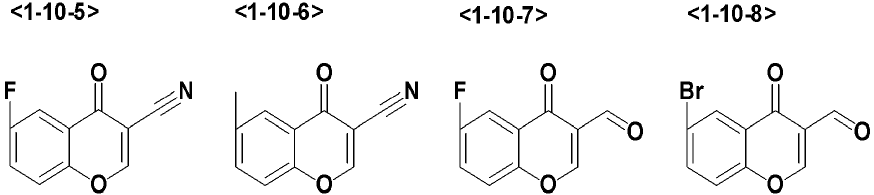

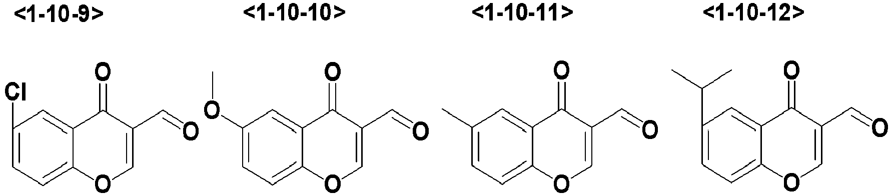

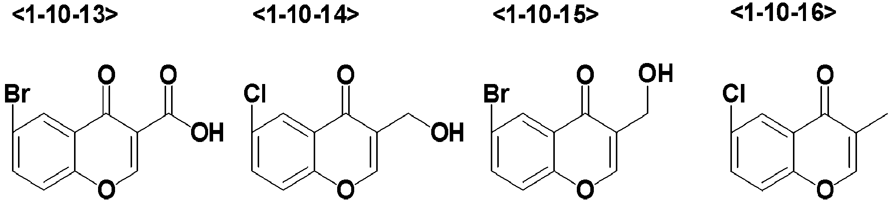

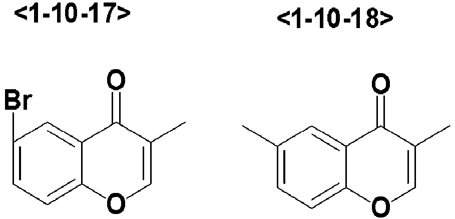

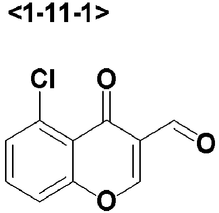

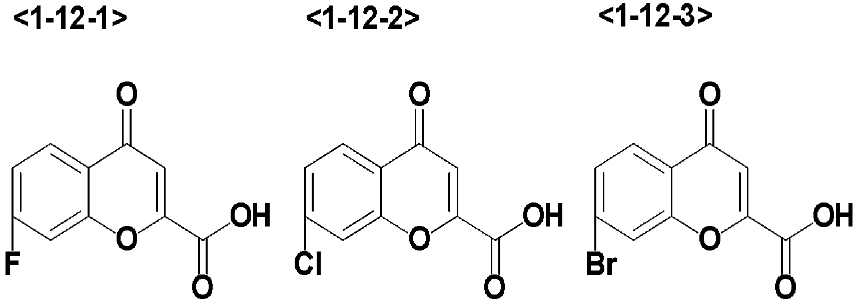

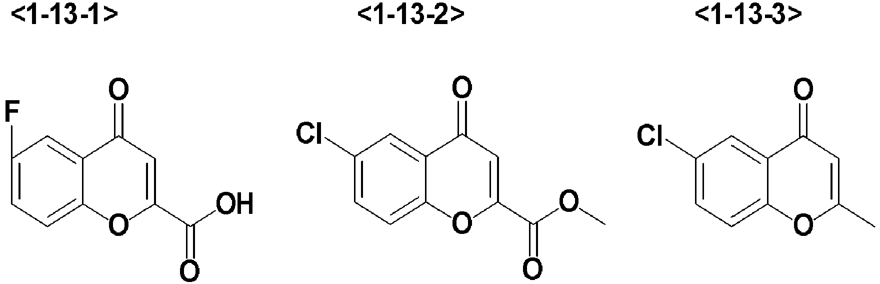

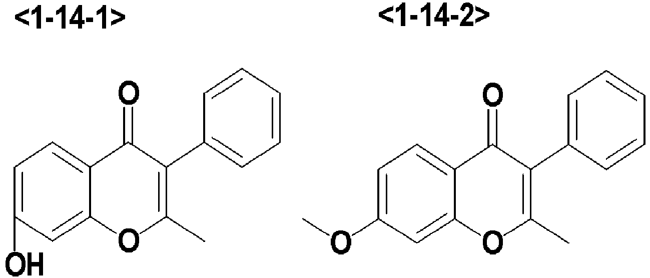

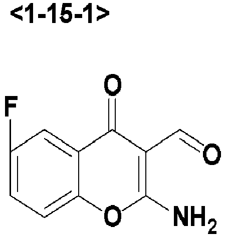

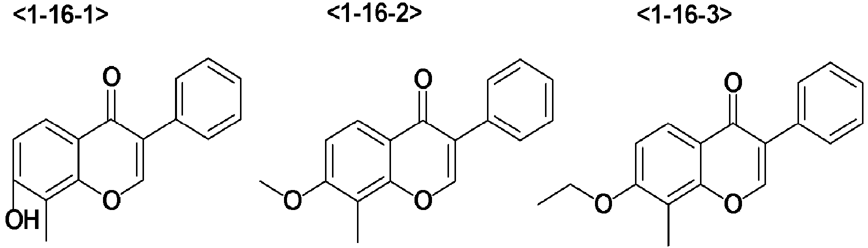

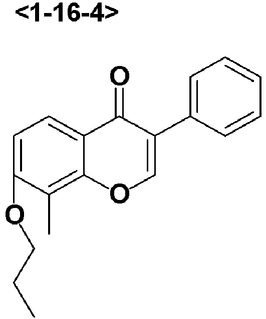

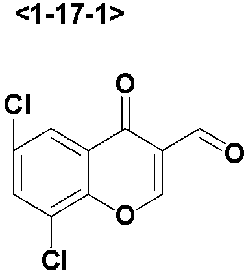

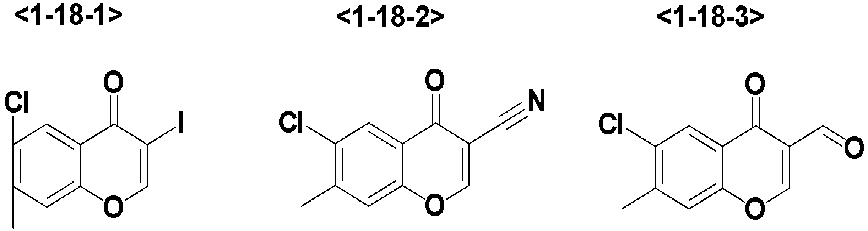

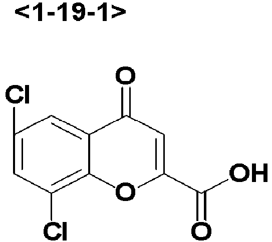

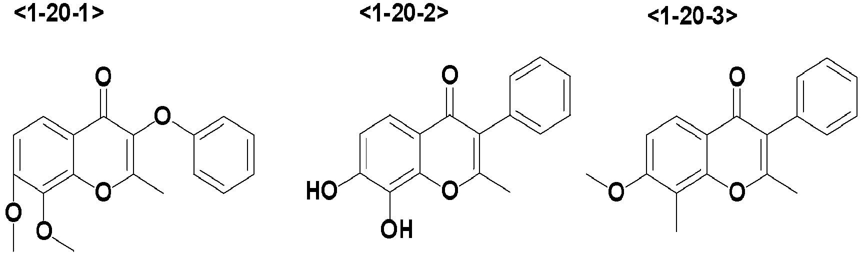

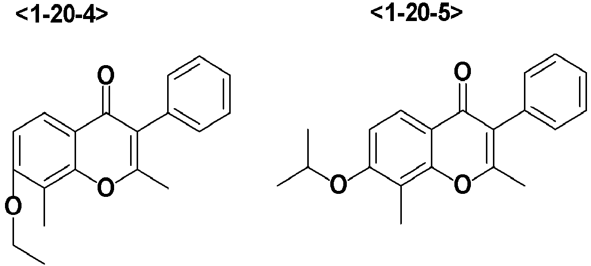

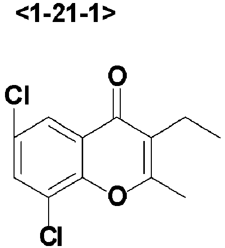

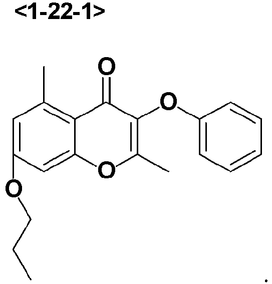

Specifically, the compound represented by Chemical Formula 1-1 may include one or more of the compounds represented by Chemical Formulas 1-1-1 to 1-1-7.

The compound represented by Chemical Formula 1-2 may include one or more of the compounds represented by Chemical Formulas 1-2-1 to 1-2-4.

The compound represented by Chemical Formula 1-3 may include the compound represented by Chemical Formula 1-3-1.

The compound represented by Chemical Formula 1-4 may include one or more of the compounds represented by Chemical Formulas 1-4-1 and 1-4-2.

The compound represented by Chemical Formula 1-5 may include one or more of the compounds represented by Chemical Formulas 1-5-1 and 1-5-2.

The compound represented by Chemical Formula 1-6 may include one or more of the compounds represented by Chemical Formulas 1-6-1 and 1-6-2.

The compound represented by Chemical Formula 1-7 may include one or more of the compounds represented by Chemical Formulas 1-7-1 and 1-7-2.

The compound represented by Chemical Formula 1-8 may include one or more of the compounds represented by Chemical Formulas 1-8-1 to 1-8-3.

The compound represented by Chemical Formula 1-9 may include one or more of the compounds represented by Chemical Formulas 1-9-1 to 1-9-15.

The compound represented by Chemical Formula 1-10 may include one or more of the compounds represented by Chemical Formulas 1-10-1 to 1-10-18.

The compound represented by Chemical Formula 1-11 may include the compound represented by Chemical Formula 1-11-1.

The compound represented by Chemical Formula 1-12 may include one or more of the compounds represented by Chemical Formulas 1-12-1 to 1-12-3.

The compound represented by Chemical Formula 1-13 may include one or more of the compounds represented by Chemical Formulas 1-13-1 to 1-13-3.

The compound represented by Chemical Formula 1-14 may include one or more of the compounds represented by Chemical Formulas 1-14-1 and 1-14-2.

The compound represented by Chemical Formula 1-15 may include the compound represented by Chemical Formula 1-15-1.

The compound represented by Chemical Formula 1-16 may include one or more of the compounds represented by Chemical Formulas 1-16-1 to 1-16-4.

The compound represented by Chemical Formula 1-17 may include the compound represented by Chemical Formula 1-17-1.

The compound represented by Chemical Formula 1-18 may include one or more of the compounds represented by Chemical Formulas 1-18-1 to 1-18-3.

The compound represented by Chemical Formula 1-19 may include the compound represented by Chemical Formula 1-19-1.

The compound represented by Chemical Formula 1-20 may include one or more of the compounds represented by Chemical Formulas 1-20-1 to 1-20-5.

The compound represented by Chemical Formula 1-21 may include the compound represented by Chemical Formula 1-21-1.

The compound represented by Chemical Formula 1-22 may include the compound represented by Chemical Formula 1-22-1.

The compound represented by Chemical Formula 1 may be included in an amount of 0.01 to 10.00 parts by weight, preferably 0.01 to 5.00 parts by weight, and more preferably 0.10 to 1.00 part by weight with respect to 100 parts by weight of the non-aqueous electrolyte for a lithium secondary battery. When the above-described condition is satisfied, an SEI layer derived from the compound represented by Chemical Formula 1 may have a sufficient thickness to allow lithium ions to smoothly migrate. Also, since the SEI layer has high mechanical rigidity, the stability of a lithium secondary battery may be improved. Also, an increase in the internal resistance of a lithium secondary battery may be prevented, and thus the capacity of a lithium secondary battery may be prevented from being degraded.

The non-aqueous electrolyte for a lithium secondary battery according to an embodiment of the present invention may include a second additive including one or more of compounds represented by the following Chemical Formulas 2 to 4:

The non-aqueous electrolyte for a lithium secondary battery, which includes a second additive including one or more of compounds represented by the following Chemical Formulas 2 to 4: 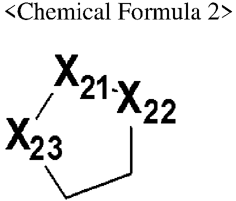 in Chemical Formula 2,
X₂₁ represents *-S(=O)-* or *-S(=O)₂-*, and
X₂₂ and X₂₃ are the same or different and each independently represent a direct bond, *-O-* or a C₁ to C₁₀ alkylene group. 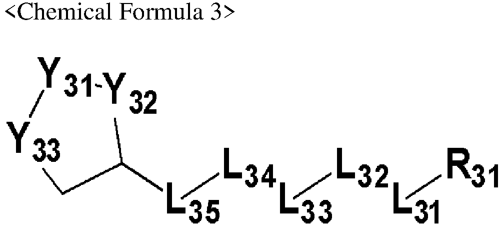
in Chemical Formula 3,
Y₃₁ and L₃₃ are the same or different and each independently represent *-S(=O)-* or *-S(=O)₂-*,
Y₃₂, Y₃₃, L₃₁, L₃₂, L₃₄ and L₃₅ are the same or different and each independently represent a direct bond, *-O-* or a C₁ to C₁₀ alkylene group, and
R₃₁ represents hydrogen, a C₁ to C₁₀ alkyl group, a C₂ to C₁₀ alkenylene group or a C₂ to C₁₀ alkynylene group. 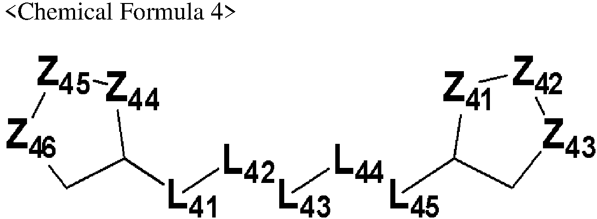
in Chemical Formula 4,
Z₄₂, Z₄₅ and L₄₃ are the same or different and each independently represent *-S(=O)-* or *-S(=O)₂-*, and
Z₄₁, Z₄₃, Z₄₄, Z₄₆, L₄₁, L₄₂, L₄₄ and L₄₅ are the same or different and each independently represent a direct bond, *-O-* or a C₁ to C₁₀ alkylene group.

In Chemical Formula 3, preferably, Y₃₂, Y₃₃, L₃₁, L₃₂, L₃₄ and L₃₅ are the same or different and each independently represent a direct bond, *-O-* or a C₁ to C₅ alkylene group. Also, preferably, R₃₁ is hydrogen, a C₁ to Cs alkyl group, a C₂ to C₅ alkenylene group or a C₂ to Cs alkynylene group.

In Chemical Formula 4, preferably, Z₄₁, Z₄₃, Z₄₄, Z₄₆, L₄₁, L₄₂, L₄₄ and L₄₅ are the same or different and each independently represent a direct bond, *-O-* or a C₁ to C₅ alkylene group.

Due to having a relatively high reduction potential, the second additive may be reduced in a lithium secondary battery before the electrolyte. As a result, unnecessary decomposition of the electrolyte may be prevented. Also, the compounds represented by Chemical Formulas 2 to 4 may form a more rigid SEI layer by including sulfur in their molecule. Here, the SEI layer may include a component such as Li(SO₃CH₃), Li₂SO₃ or the like.

The compound represented by Chemical Formula 2 may include one or more of compounds represented by the following Chemical Formulas 2-1 to 2-4:

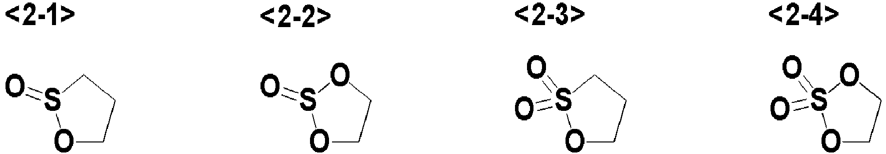

The compound represented by Chemical Formula 3 may include one or more of compounds represented by the following Chemical Formulas 3-1 to 3-3:

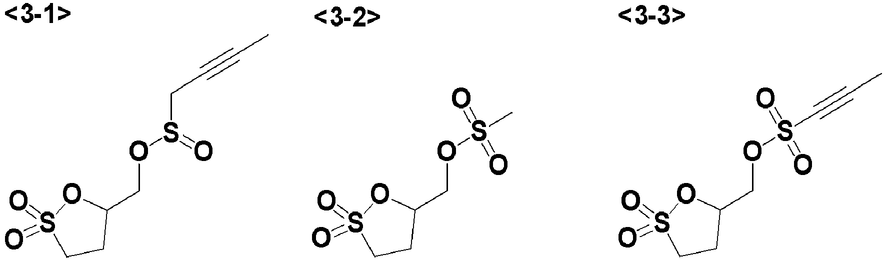

The compound represented by Chemical Formula 4 may include one or more of compounds represented by the following Chemical Formulas 4-1 to 4-3:

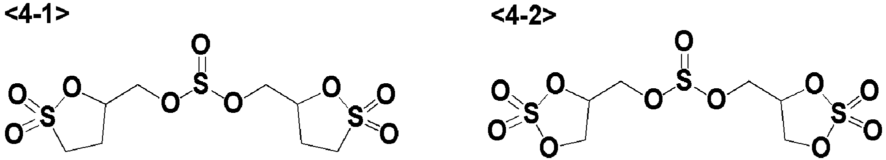

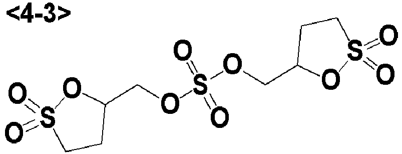

The second additive may be included in an amount of 0.01 to 5.00 parts by weight, preferably 0.05 to 3.00 parts by weight, and more preferably 0.10 to 1.00 part by weight with respect to 100 parts by weight of the non-aqueous electrolyte for a lithium secondary battery. When the above-described condition is satisfied, an SEI layer having an appropriate thickness is formed on a negative electrode, and thus the lifespan stability of a lithium secondary battery can be improved while performance degradation caused by side reactions is suppressed.

Even when the second additive includes two or more of the compounds represented by Chemical Formulas 2 to 4, the content of the second additive may satisfy the above-described condition.

The non-aqueous electrolyte for a lithium secondary battery according to an embodiment of the present invention may include one or more of a lithium salt and an organic solvent.

As the lithium salt, any lithium salt that is typically used in a non-aqueous electrolyte for a lithium secondary battery may be used without limitation. Specifically, the lithium salt includes Li⁺ as a cation and one or more of F, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈', BF₂C₂O₄CHF-, PF₄C₂O₄⁻, PF₂C₄O₈⁻, PO₂F₂⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may be one or more of LiPF₆, LiClO₄, LiBF₄, LiN(FSO₂)₂(LiFSI), LiN(SO₂CF₃)₂(LiTFSI), lithium bis(pentafluoroethanesulfonyl)imide (LiBETI), LiSO₃CF₃, LiPO₂F₂, lithium bis(oxalate)borate (LiBOB), lithium difluoro(oxalate)borate (LiFOB), lithium difluoro(bisoxalato)phosphate (LiDFOP), lithium tetrafluoro(oxalate)phosphate (LiTFOP) and lithium fluoromalonato(difluoro)borate (LiFMDFB), and is preferably LiPF₆.

The concentration of the lithium salt in the non-aqueous organic solution containing the lithium salt and the organic solvent may be 0.5 to 4.0 M, specifically 0.5 to 3.0 M, and more specifically 0.8 to 2.0 M. When the concentration of the lithium salt falls within the above range, an effect of improving low-temperature output and cycle characteristics is sufficiently secured, and an excessive increase in viscosity and surface tension is prevented, and thus appropriate electrolyte wetting can be obtained.

As the organic solvent, various organic solvents that are typically used in a lithium electrolyte may be used without limitation. For example, the organic solvent may be a cyclic carbonate-based solvent, a linear carbonate-based solvent, a linear ester-based solvent, a cyclic ester-based solvent, a nitrile-based solvent or a mixture thereof, preferably includes one or more of a cyclic carbonate-based solvent, a linear carbonate-based solvent and a linear ester-based solvent, and more preferably includes one or more of a cyclic carbonate-based solvent and a linear carbonate-based solvent.

The cyclic carbonate-based solvent is a high-viscosity organic solvent and effectively dissociates the lithium salt in the electrolyte due to having a high dielectric constant. The cyclic carbonate-based solvent may include one or more of ethylene carbonate, propylene carbonate, 1,2-butylene carbonate, 2,3-butylene carbonate, 1,2-pentylene carbonate, 2,3-pentylene carbonate and vinylene carbonate, and preferably includes one or more of ethylene carbonate and propylene carbonate.

In addition, the linear carbonate-based solvent is an organic solvent having low viscosity and a low dielectric constant and may include one or more of dimethyl carbonate, diethyl carbonate, dipropyl carbonate, ethyl methyl carbonate (EMC), methyl propyl carbonate and ethyl propyl carbonate, and preferably includes one or more of ethyl methyl carbonate, dimethyl carbonate and diethyl carbonate.

It is preferable that a mixture of the cyclic carbonate-based solvent and the linear carbonate-based solvent is used as the organic solvent to prepare an electrolyte having high ionic conductivity.

The linear ester-based solvent may include one or more of methyl acetate, ethyl acetate, propyl acetate, methyl propionate, ethyl propionate, propyl propionate and butyl propionate, and preferably includes one or more of methyl propionate, ethyl propionate and propyl propionate.

The cyclic ester-based solvent may include one or more of γ-butyrolactone, γ-valerolactone, γ-caprolactone, δ-valerolactone and ε-caprolactone.

The nitrile-based solvent may include one or more of succinonitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile and 4-fluorophenylacetonitrile, and preferably includes succinonitrile.

In the total weight of the non-aqueous electrolyte, the remainder excluding components (e.g., the compound represented by Chemical Formula 1, the additive and the lithium salt) other than the organic solvent may all be an organic solvent unless otherwise specified.

The non-aqueous electrolyte for a lithium secondary battery according to an embodiment of the present invention may optionally further include the following additives to prevent electrode collapse caused by decomposition of the electrolyte in a high voltage environment or improve low-temperature high-rate discharge characteristics, high-temperature stability, overcharge prevention, and battery expansion suppression at a high temperature.

The additives may include one or more of a cyclic carbonate-based compound, a halogen-substituted carbonate-based compound, a sulfate-based compound, a phosphate-based or phosphite-based compound, a borate-based compound, a nitrile-based compound, an amine-based compound, a silane-based compound, a benzene-based compound and a lithium salt-based compound.

The cyclic carbonate-based compound may include one or more of vinylene carbonate and vinyl ethylene carbonate, specifically, vinylene carbonate.

The halogen-substituted carbonate-based compound may include fluoroethylene carbonate (FEC).

The sulfate-based compound is a material capable of forming a stable SEI layer without cracks even when stored at a high temperature by being electrically decomposed on a negative electrode surface, and may include one or more of ethylene sulfate, trimethylene sulfate and methyl trimethylene sulfate.

The phosphate-based or phosphite-based compound may include one or more of lithium difluoro(bisoxalato)phosphate, lithium difluorophosphate, tris(trimethylsilyl)phosphate, tris(trimethylsilyl)phosphite, tris(2,2,2-trifluoroethyl)phosphate and tris(trifluoroethyl)phosphite.

The borate-based compound may include lithium tetraphenylborate.

The nitrile-based compound may include one or more of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, ethylene glycol bis(2-cyanoethyl) ether, 1,3,6-hexanetricarbonitrile, 1,4-dicyano-2-butene and 1,2,3-tris(2-cyanoethyl)propane.

The amine-based compound may include one or more of triethanolamine and ethylenediamine, and the silane-based compound may include tetravinylsilane.

The benzene-based compound may include one or more of monofluorobenzene, difluorobenzene, trifluorobenzene and tetrafluorobenzene.

The lithium salt-based compound is different from the lithium salt included in the non-aqueous electrolyte and may include one or more of lithium difluorophosphate (LiDFP; LiPO₂F₂), lithium bisoxalatoborate (LiBOB; LiB(C₂O₄)₂), lithium tetrafluoroborate (LiBF₄) and lithium difluoro(bisoxalato)phosphate.

Preferably, the non-aqueous electrolyte according to an embodiment of the present invention includes, as an additive, one or more of vinylene carbonate, vinyl ethylene carbonate, fluoroethylene carbonate, ethylene sulfate, succinonitrile, adiponitrile, ethylene glycol bis(2-cyanoethyl) ether, 1,3,6-hexanetricarbonitrile, 1,4-dicyano-2-butene, 1,2,3-tris(2-cyanoethyl)propane, lithium difluoro oxalate borate, lithium tetrafluoroborate, lithium difluoro(bisoxalato)phosphate and lithium difluorophosphate. Preferably, the non-aqueous electrolyte may include one or more of vinylene carbonate, ethylene sulfate and lithium difluorophosphate. In this case, since the additive decomposes faster than the compound represented by Chemical Formula 1 and forms a film, the amount of the compound represented by Chemical Formula 1 remaining after an activation process increases, and thus the long-term performance of a battery may be improved.

Meanwhile, the additive may be included in an amount of 0.1 wt% to 10.0 wt%, and preferably, 0.3 wt% to 5.0 wt% with respect of the total weight of the non-aqueous electrolyte. When the content of the additive falls within the above range, a film is formed on a positive electrode and a negative electrode, and thus side reactions can be suppressed.

### 2. Lithium secondary battery

A lithium secondary battery according to another aspect of the present invention includes: the non-aqueous electrolyte for a lithium secondary battery according to one aspect of the present invention; a positive electrode including a positive electrode active material; a negative electrode including a negative electrode active material; and a separator interposed between the positive electrode and the negative electrode.

Since the non-aqueous electrolyte for a lithium secondary battery has been described above, the description thereof is omitted, and other components will be described below.

### 1) Positive electrode

The positive electrode according to the present invention includes a positive electrode active material and may be manufactured by applying, onto a positive electrode current collector, a positive electrode slurry including a positive electrode active material, a binder, a conductive material and a solvent and then performing drying and roll-pressing.

The positive electrode current collector is not particularly limited as long as it does not cause a chemical change in the battery and has conductivity, and for example, stainless steel, aluminum, nickel, titanium, calcined carbon, or aluminum or stainless steel whose surface has been treated with carbon, nickel, titanium, silver or the like may be used.

The positive electrode active material is a compound capable of reversible intercalation and deintercalation of lithium and may include one or more of LCO(LiCoO₂), LNO(LiNiO₂), LMO(LiMnO₂), LiMn₂O₄, LiCoPO₄, LFP(LiFePO₄) and lithium composite transition metal oxides including nickel (Ni), cobalt (Co) and manganese (Mn).

More specifically, the lithium metal oxide may include one or more of a lithium-manganese-based oxide (e.g., LiMnO₂, LiMn₂O₄, Li₂MnO₃, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-y}Mn_{y}O₂ (where 0<Y<1), LiMn_{2-z}Ni_{z}O₄ (where 0 < Z < 2), etc.), a lithium-nickel-cobalt-based oxide (e.g., LiNi_{1-Y1}Co_{Y1}O₂ (where 0<Y1<1), etc.), a lithium-manganese-cobalt-based oxide (e.g., LiCo_{1-Y2}Mn_{Y2}O₂ (where 0<Y2<1), LiMn_{2-z1}Co_{z1}O₄ (where 0 < Z1 < 2), etc.), a lithium-nickel-manganese-cobalt-based oxide (e.g., Li(NiₚCo_{q}Mnᵣ₁)O₂ (where 0 < p < 1, 0 < q < 1, 0 < r1 < 1 and p+q+rl=1), Li(Niₚ₁Co_{q1}Mnᵣ₂)O₄ (where 0 < p1 < 2, 0 < q1 < 2, 0 < r2 < 2 and p1+q1+r2=2), etc.) and a lithium-nickel-cobalt-manganese-transition metal (M) oxide (e.g., Li(Niₚ₂Co_{q2}Mnᵣ₃M_{S2})O₂ (where M is one or more selected from the group consisting of Al, Fe, V, Cr, Ti, Ta, Mg and Mo, and p2, q2, r3 and s2 are respective atomic fractions of elements and satisfy 0 < p2 < 1, 0 < q2 < 1, 0 < r3 < 1, 0 < s2 < 1 and p2+q2+r3+s2=1), etc.).

According to the present invention, the positive electrode active material may include one or more of an over-lithiated layered oxide represented by the following Chemical Formula 5 and an NCM-based lithium composite transition metal oxide represented by the following Chemical Formula 6 to improve battery capacity:

<Chemical Formula 5> xLi₂MnO₃·(1-x)Liₐ₁Ni_{b1}Co_{c1}Mn_{d1}M²ₑ₁O₂

in Chemical Formula 5,
0<x<1, 0≤a1≤2, 0≤b1≤1, 0≤c1≤1, 0≤d1≤1, 0≤e1≤1 and al+bl+cl+dl+el=2 are satisfied, and
M¹ includes one or more of Na, K, Mg, Al, Fe, Cr, Y, Sn, Ti, B, P, Zr, Ru, Nb, W, Ba, Sr, La, Ga, Gd, Sm, Ca, Ce, Ta, Mo, Sc, V, Zn, Cu, In, S, Bi, Rh, Pd, Ag, Cd and Tc,

   <Chemical Formula 6> Liₐ₂Ni_{b2}CO_{c2}Mn_{d2}M²ₑ₂O₂
in Chemical Formula 6,
0.9≤a2≤1.1, 0.7≤b2<1, 0≤c2<1, 0<d2<1, 0<e2<1 and b2+c2+d2+e2=1 are satisfied, and
M² includes one or more of Na, K, Mg, Al, Fe, Cr, Y, Sn, Ti, B, P, Zr, Ru, Nb, W, Ba, Sr, La, Ga, Gd, Sm, Ca, Ce, Ta, Mo, Sc, V, Zn, Cu, In, S, Bi, Rh, Pd, Ag, Cd and Tc.

Meanwhile, when the positive electrode active material includes an over-lithiated layered oxide or an NCM-based lithium composite transition metal oxide, high-pressure operating conditions are required, and thus corrosion of the electrode surface and gas generation due to decomposition of the electrolyte may become more problematic. However, the lithium secondary battery according to the present invention has an advantage of having high capacity and not experiencing such problems by including the above-described non-aqueous electrolyte.

The positive electrode active material may be included in an amount of 80 wt% to 99 wt%, and specifically, 90 wt% to 99 wt% based on the total weight of solids in the positive electrode slurry. When the content of the positive electrode active material is 80 wt% or less, energy density decreases, and thus capacity may be degraded.

The binder is a component that assists the bonding of the active material and the conductive material and the bonding to the current collector, and may be typically added in an amount of 1 wt% to 30 wt% based on the total weight of solids in the positive electrode slurry. Examples of the binder include polyvinylidene fluoride, polyvinyl alcohol, carboxymethylcellulose, starch, hydroxypropyl cellulose, regenerated cellulose, polyvinylpyrrolidone, polytetrafluoroethylene, polyethylene, polypropylene, an ethylenepropylene-diene monomer (EPDM), a sulfonated EPDM, styrene butadiene rubber, fluoro-rubber, and various copolymers thereof.

In addition, the conductive material is a material that impart conductivity without causing a chemical change in the battery, and may be added in an amount of 0.5 wt% to 20 wt% based on the total weight of solids in the positive electrode slurry.

The conductive material may be selected from, for example, carbon black such as acetylene black, Ketjen black, channel black, furnace black, lamp black, thermal black or the like; graphite powder such as natural graphite, artificial graphite, carbon nanotubes, graphite or the like; a conductive fiber such as carbon fiber, metal fiber or the like; a conductive powder such as fluorinated carbon powder, aluminum powder, nickel powder or the like; a conductive whisker such as zinc oxide, potassium titanate or the like; a conductive metal oxide such as titanium oxide or the like; and a conductive material such as a polyphenylene derivative or the like.

In addition, the solvent in the positive electrode slurry may include an organic solvent such as N-methyl-2-pyrrolidone or the like and may be used in an amount that exhibits preferable viscosity when the positive electrode active material, the binder and the conductive material are included. For example, the solvent may be included so that the concentration of solids of the positive electrode slurry including the positive electrode active material, the binder and the conductive material is 40 wt% to 90 wt%, and preferably, 50 wt% to 80 wt%.

### 2) Negative electrode

The negative electrode includes a negative electrode active material and may be manufactured by applying, onto a negative electrode current collector, a negative electrode slurry including a negative electrode active material, a binder, a conductive material and a solvent and then performing drying and roll-pressing.

The negative electrode current collector may typically have a thickness of 3 µm to 500 µm. The negative electrode current collector is not particularly limited as long as it does not cause a chemical change in the battery and has high conductivity, and for example, copper, stainless steel, aluminum, nickel, titanium, calcined carbon, copper or stainless steel whose surface has been treated with carbon, nickel, titanium, silver or the like, or an aluminum-cadmium alloy may be used. Also, like the positive electrode current collector, the negative electrode current collector may have fine irregularities formed on the surface thereof to increase the bonding strength of the negative electrode active material, and may be used in any of various forms such as a film, a sheet, a foil, a net, a porous material, a foam, a non-woven fabric and the like.

In addition, the negative electrode active material may include one or more of a carbon material capable of reversible intercalation and deintercalation of lithium ions, a metal or an alloy of the metal and lithium, a metal composite oxide, a material capable of doping and dedoping lithium, a lithium metal and a transition metal oxide.

The carbon material capable of reversible intercalation and deintercalation of lithium ions may be used without particular limitation as long as it is a carbon-based negative electrode active material typically used in a lithium ion secondary battery, and representative examples thereof include crystalline carbon, amorphous carbon or a combination thereof. Examples of the crystalline carbon include graphite such as amorphous, platy, flaky, spherical or fibrous natural graphite or artificial graphite, and examples of the amorphous carbon include soft carbon (low-temperature calcined carbon), hard carbon, mesophase pitch-based carbides, calcined cokes and the like.

As the metal or alloy of the metal and lithium, a metal including one or more of Cu, Ni, Na, K, Rb, Cs, Fr, Be, Mg, Ca, Sr, Si, Sb, Pb, In, Zn, Ba, Ra, Ge, Al and Sn or an alloy of the metal and lithium may be used.

The metal composite oxide may be one or more of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1) and SnₓMe₁₋ₓMe'_{y}O_{z} (Me: Mn, Fe, Pb, Ge; Me': Al, B, P, Si, Group 1, Group 2, and Group 3 elements of the periodic table, halogens; 0<x≤1; 1≤y≤3; and 1≤z≤8).

Examples of the material capable of doping and dedoping lithium include Si, SiOₓ (0<x<2), an Si-Y alloy (where Y is an element selected from alkali metals, alkaline earth metals, Group 13 elements, Group 14 elements, transition metals, rare earth elements, and combinations thereof and is not Si), Sn, SnO₂, Sn-Y (where Y is an element selected from alkali metals, alkaline earth metals, Group 13 elements, Group 14 elements, transition metals, rare earth elements, and combinations thereof and is not Sn) and the like. Also, a mixture of one or more thereof with SiO₂ may be used. The element Y may be selected from Mg, Ca, Sr, Ba, Ra, Sc, Y, Ti, Zr, Hf, Rf, V, Nb, Ta, dubnium (Db), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po and a combination thereof.

Examples of the transition metal oxide include a lithium-containing titanium composite oxide (LTO), vanadium oxide, lithium vanadium oxide and the like.

The negative electrode active material may be included in an amount of 80 wt% to 99 wt% based on the total weight of solids in the negative electrode slurry.

The binder is a component that assists the bonding among the conductive material, the active material and the current collector and may be typically added in an amount of 1 wt% to 30 wt% based on the total weight of solids in the negative electrode slurry. Examples of the binder include polyvinylidene fluoride, polyvinyl alcohol, carboxymethylcellulose, starch, hydroxypropyl cellulose, regenerated cellulose, polyvinylpyrrolidone, polytetrafluoroethylene, polyethylene, polypropylene, an EPDM, a sulfonated EPDM, styrene butadiene rubber, fluoro-rubber, and various copolymers thereof.

The conductive material is a component for improving the conductivity of the negative electrode active material and may be added in an amount of 0.5 wt% to 20 wt% based on the total weight of solids in the negative electrode slurry. The conductive material is not particularly limited as long as it does not cause a chemical change in the battery and has conductivity, and for example, carbon black such as acetylene black, Ketjen black, channel black, furnace black, lamp black, thermal black or the like; graphite powder with a highly developed crystal structure, such as natural graphite, artificial graphite, carbon nanotubes, graphite or the like; a conductive fiber such as carbon fiber, metal fiber or the like; a conductive powder such as fluorinated carbon powder, aluminum powder, nickel powder or the like; a conductive whisker such as zinc oxide, potassium titanate or the like; a conductive metal oxide such as titanium oxide or the like; or a conductive material such as a polyphenylene derivative or the like may be used.

The solvent in the negative electrode slurry may include water or an organic solvent such as N-methyl-2-pyrrolidone, alcohol or the like, and may be used in an amount that exhibits preferable viscosity when the negative electrode active material, the binder and the conductive material are included. For example, the solvent may be included so that the concentration of solids of the slurry including the negative electrode active material, the binder and the conductive material is 30 wt% to 80 wt%, and preferably, 40 wt% to 70 wt%.

### 3) Separator

The separator separates the negative electrode and the positive electrode and provides a passage through which lithium ions migrate, and any separator used as a separator in a typical lithium secondary battery may be used without particular limitation. In particular, a separator that exhibits low resistance to the migration of electrolyte ions and has an excellent electrolyte impregnation ability and excellent safety is preferred.

Specifically, as the separator, a porous polymer film, for example, a porous polymer film made of a polyolefin-based polymer such as an ethylene homopolymer, a propylene homopolymer, an ethylene/butene copolymer, an ethylene/hexene copolymer, an ethylene/methacrylate copolymer or the like or a stacked structure having two or more layers thereof may be used. Also, a typical porous non-woven fabric, for example, a non-woven fabric made of high-melting-point glass fiber, polyethylene terephthalate fiber or the like may be used. Also, a coated separator including a ceramic component or a polymer material to secure heat resistance or mechanical strength may be used, and the separator may be used in a single-layer or multi-layer structure.

The lithium secondary battery according to the present invention may be effectively used in the fields such as portable devices such as mobile phones, laptop computers, digital cameras and the like; and electric vehicles such as hybrid electric vehicles (HEVs) and the like.

According to still another embodiment of the present invention, a battery module including the lithium secondary battery as a unit cell, and a battery pack including the same are provided.

The battery module or battery pack may be used as a power source of one or more medium-to-large-sized devices of as power tools; electric vehicles (EVs), HEVs and plug-in HEVs (PHEVs); and energy storage systems.

Although there is no limitation on the shape of the lithium secondary battery according to the present invention, a cylindrical form using a can, a prismatic form, a pouch form, a coin form, or the like may be used.

The lithium secondary battery according to the present invention may be used not only in a battery cell used as a power source of a small-sized device, but also as a unit battery of a medium-to-large-sized battery module including a plurality of battery cells.

Hereinafter, the present invention will be described in detail with reference to examples. However, examples of the present invention may be modified into several different forms, and the scope of the present invention is not limited to the examples to be described below. The examples of the present invention are provided so that this disclosure will be thorough and complete, and will fully convey the concept of embodiments to those skilled in the art.

### Synthesis Example 1

### <Preparation of compound represented by Chemical Formula 3-3>

5 g of 3-butene-1,2-diol, 11.5 g of Na₂S₂O₅ and 10 g of water were input into a flask and stirred at 65 °C for 9 hours while maintaining a pH of 7.3 to prepare a reaction solution. The reaction solution was concentrated through distillation under reduced pressure, and 50 ml of methanol was added to obtain a precipitate. The precipitate was filtered under reduced pressure and dried in a vacuum oven to obtain 10 g of sodium; 3,4-dihydroxybutane-2-sulfonate.

Afterward, 10 g of the sodium; 3,4-dihydroxybutane-2-sulfonate, 0.2 g of dimethylformamide and 70 g of tetrahydroxyfuran were input into a flask, and 10 g of thionyl chloride was slowly added dropwise at 0 °C. After the dropwise addition was completed, the reaction product was heated at 60 °C for 2 hours, the heated reaction product was cooled to 25 °C, and hydrochloric acid and methanol were added. Subsequently, the resulting reaction product was passed through a silica column and concentrated under reduced pressure to obtain 5 g of 3-hydroxymethyl-1,3-propane sultone.

Subsequently, 30 g of diethyl acetate and 2.9 g of pyridine were input into a flask, 5 g of 1-propyne-1-sulfonyl chloride was slowly added at 0 °C, and stirring was performed at 25 °C for 30 minutes. 5 g of the 3-hydroxymethyl-1,3-propane sultone was dissolved in 20 g of dimethyl acetate and then slowly input into the flask. After a 2-hour reaction, the resulting product was extracted with water and dimethyl acetate to obtain an organic layer. The organic layer was concentrated to obtain a compound represented by Chemical Formula 3-3.

Whether the compound represented by Chemical Formula 3-3 was synthesized was confirmed through a 1H-NMR spectrum (AVANCE NEO commercially available from Bruker), and 1H-NMR data is listed below.

¹H-NMR (500 MHz, Bruker, ACN-d3) = 4.8(1H), 4.18(1H), 4.05(1H), 3.30(2H), 2.55(1H), 2.3(1H), 1.9(3H)

### Synthesis Example 2

### <Preparation of compound represented by Chemical Formula 4-1>

5 g of 1-propyne-1-sulfonyl chloride was obtained in the same manner as in Synthesis Example 1.

30 g of diethyl acetate and 2.9 g of pyridine were input into a flask, 2.2 g of thionyl chloride was slowly added, and stirring was performed at 25 °C for 30 minutes. 5 g of the 3-hydroxymethyl-1,3-propane sultone was dissolved in 20 g of dimethyl acetate and then slowly input into the flask. After a 2-hour reaction, the resulting product was extracted with water and methylene chloride to obtain an organic layer. The organic layer was concentrated to obtain a compound represented by Chemical Formula 4-1.

Whether the compound represented by Chemical Formula 4-1 was synthesized was confirmed through a 1H-NMR spectrum (AVANCE NEO commercially available from Bruker), and 1H-NMR data is listed below.

¹H-NMR (500 MHz, Bruker, ACN-d3) = 4.9(2H), 4.28(2H), 4.15(2H), 3.35(4H), 2.6(2H), 2.4(2H)

### Synthesis Example 3

### <Preparation of compound represented by Chemical Formula 4-3>

5 g of the compound represented by Chemical Formula 4-1, which was obtained in Synthesis Example 2, 40 g of acetonitrile and 20 g of water were input into a flask. 0.03 g of RuCl₃ and 4 g of NaIO₄ were dissolved in 30 g of water at 0 °C to prepare a mixture. Subsequently, the mixture was slowly added dropwise to the flask while stirring, and allowed to react for 30 minutes. Subsequently, 100 g of t-butyl ether was input into the flask and stirred, and then the product was separated. The product was extracted with water and ethyl acetate to obtain an organic layer, and the organic layer was concentrated under reduced pressure to obtain a compound represented by Chemical Formula 4-3.

Whether the compound represented by Chemical Formula 4-3 was synthesized was confirmed through a 1H-NMR spectrum (AVANCE NEO commercially available from Bruker), and 1H-NMR data is listed below.

¹H-NMR (500 MHz, Bruker, ACN-d3) = 5.1(2H), 4.7(2H), 4.6(2H), 3.5(4H), 2.9(2H), 2.4(2H)

### Example 1

### <Preparation of non-aqueous electrolyte>

Ethylene carbonate and ethyl methyl carbonate were mixed in a volume ratio of 3:7, and then LiPF₆ was dissolved in the mixture at a concentration of 1.0 M to prepare a non-aqueous organic solution. 1.00 part by weight of a compound represented by Chemical Formula 1-1-1 (Manufacturer: TCI, Product name: chromone-3-carbonitrile) and 99.00 parts by weight of the non-aqueous organic solution were mixed to prepare a non-aqueous electrolyte.

### <Manufacture of lithium secondary battery>

A positive electrode active material ((0.35)Li₂MnO₃·(0.65)LiNi_{0.55}Mn_{0.45}O₂), a conductive material (carbon black) and a binder (polyvinylidene fluoride) were added in a weight ratio of 95.5:1.5:3.0 to N-methyl-2-pyrrolidone to prepare a positive electrode slurry (solid content: 60.00 wt%). The positive electrode slurry was applied onto a 15.00 µm-thick aluminum (Al) film, which is a positive electrode current collector, dried, and roll-pressed to manufacture a positive electrode.

A negative electrode active material (a weight ratio of artificial graphite:natural graphite=1:1), a conductive material (carbon black) and a binder (polyvinylidene fluoride) were added in a weight ratio of 96.0:0.5:3.5 to distilled water, which is a solvent, to prepare a negative electrode slurry (solid content: 50.00 wt%). The negative electrode slurry was applied onto an 8 µm-thick copper (Cu) film, which is a negative electrode current collector, dried, and roll-pressed to manufacture a negative electrode.

In a dry room, a separator (porous polypropylene) was interposed between the positive electrode and the negative electrode to manufacture an electrode assembly. The electrode assembly was placed in a battery case, the non-aqueous electrolyte was injected, and the battery case was sealed to manufacture a pouch-type lithium secondary battery (battery capacity: 200 mA·h).

### Example 2

A non-aqueous electrolyte and a lithium secondary battery were manufactured in the same manner as in Example 1, except that a compound represented by Chemical Formula 1-2-2 (Manufacturer: TCI, Product name: chromone-2-carboxylic acid) was used instead of the compound represented by Chemical Formula 1-1-1 in the preparation of a non-aqueous electrolyte of Example 1.

### Example 3

A non-aqueous electrolyte and a lithium secondary battery were manufactured in the same manner as in Example 1, except that a compound represented by Chemical Formula 1-3-1 (Manufacturer: Aurum Pharmatech, Product name: 8-methyl-4H-chromen-4-one) was used instead of the compound represented by Chemical Formula 1-1-1 in the preparation of a non-aqueous electrolyte of Example 1.

### Example 4

A non-aqueous electrolyte and a lithium secondary battery were manufactured in the same manner as in Example 1, except that a compound represented by Chemical Formula 1-4-1 (Manufacturer: Sigma Aldrich, Product name: 7-hydroxy-4-chromone) was used instead of the compound represented by Chemical Formula 1-1-1 in the preparation of a non-aqueous electrolyte of Example 1.

### Example 5

A non-aqueous electrolyte and a lithium secondary battery were manufactured in the same manner as in Example 1, except that a compound represented by Chemical Formula 1-5-1 (Manufacturer: TCI, Product name: 6-nitrochromone) was used instead of the compound represented by Chemical Formula 1-1-1 in the preparation of a non-aqueous electrolyte of Example 1.

### Example 6

A non-aqueous electrolyte and a lithium secondary battery were manufactured in the same manner as in Example 1, except that a compound represented by Chemical Formula 1-6-2 (Manufacturer: Sigma Aldrich, Product name: 5-hydroxy-4H-chromen-4-one) was used instead of the compound represented by Chemical Formula 1-1-1 in the preparation of a non-aqueous electrolyte of Example 1.

### Example 7

A non-aqueous electrolyte and a lithium secondary battery were manufactured in the same manner as in Example 1, except that a compound represented by Chemical Formula 1-7-1 (Manufacturer: TCI, Product name: 2-amino-3-formylchromone) was used instead of the compound represented by Chemical Formula 1-1-1 in the preparation of a non-aqueous electrolyte of Example 1.

### Example 8

A non-aqueous electrolyte and a lithium secondary battery were manufactured in the same manner as in Example 1, except that a compound represented by Chemical Formula 1-8-1 (Manufacturer: Sigma Aldrich, Product name: 8-chloro-4-oxo-4H-chromene-3-carbaldehyde) was used instead of the compound represented by Chemical Formula 1-1-1 in the preparation of a non-aqueous electrolyte of Example 1.

### Example 9

A non-aqueous electrolyte and a lithium secondary battery were manufactured in the same manner as in Example 1, except that a compound represented by Chemical Formula 1-8-3 (Manufacturer: Sigma Aldrich, Product name: 8-methoxy-3-phenyl-4H-chromen-4-one) was used instead of the compound represented by Chemical Formula 1-1-1 in the preparation of a non-aqueous electrolyte of Example 1.

### Example 10

A non-aqueous electrolyte and a lithium secondary battery were manufactured in the same manner as in Example 1, except that a compound represented by Chemical Formula 1-9-4 (Manufacturer: Sigma Aldrich, Product name: 7-chloro-4-oxo-4H-chromene-3-carbonitrile) was used instead of the compound represented by Chemical Formula 1-1-1 in the preparation of a non-aqueous electrolyte of Example 1.

### Example 11

A non-aqueous electrolyte and a lithium secondary battery were manufactured in the same manner as in Example 1, except that a compound represented by Chemical Formula 1-9-14 (Manufacturer: TCI, Product name: 7-hydroxyisoflavone) was used instead of the compound represented by Chemical Formula 1-1-1 in the preparation of a non-aqueous electrolyte of Example 1.

### Example 12

A non-aqueous electrolyte and a lithium secondary battery were manufactured in the same manner as in Example 1, except that a compound represented by Chemical Formula 1-10-5 (Manufacturer: Sigma Aldrich, Product name: 3-cyano-6-fluorochromone) was used instead of the compound represented by Chemical Formula 1-1-1 in the preparation of a non-aqueous electrolyte of Example 1.

### Example 13

A non-aqueous electrolyte and a lithium secondary battery were manufactured in the same manner as in Example 1, except that a compound represented by Chemical Formula 1-10-6 (Manufacturer: TCI, Product name: 6-methylchromone-3-carbonitrile) was used instead of the compound represented by Chemical Formula 1-1-1 in the preparation of a non-aqueous electrolyte of Example 1.

### Example 14

A non-aqueous electrolyte and a lithium secondary battery were manufactured in the same manner as in Example 1, except that a compound represented by Chemical Formula 1-11-1 (Manufacturer: Sigma Aldrich, Product name: 8-chloro-4-oxo-4H-chromene-3-carbaldehyde) was used instead of the compound represented by Chemical Formula 1-1-1 in the preparation of a non-aqueous electrolyte of Example 1.

### Example 15

A non-aqueous electrolyte and a lithium secondary battery were manufactured in the same manner as in Example 1, except that a compound represented by Chemical Formula 1-12-1 (Manufacturer: Sigma Aldrich, Product name: 7-fluorochromone-2-carboxylic acid) was used instead of the compound represented by Chemical Formula 1-1-1 in the preparation of a non-aqueous electrolyte of Example 1.

### Example 16

A non-aqueous electrolyte and a lithium secondary battery were manufactured in the same manner as in Example 1, except that a compound represented by Chemical Formula 1-13-2 (Manufacturer: Sigma Aldrich, Product name: methyl 6-chloro-4-oxo-4H-chromene-2-carboxylate) was used instead of the compound represented by Chemical Formula 1-1-1 in the preparation of a non-aqueous electrolyte of Example 1.

### Example 17

A non-aqueous electrolyte and a lithium secondary battery were manufactured in the same manner as in Example 1, except that a compound represented by Chemical Formula 1-14-2 (Manufacturer: Sigma Aldrich, Product name: 7-methoxy-2-methyl-3-phenyl-4H-chromen-4-one) was used instead of the compound represented by Chemical Formula 1-1-1 in the preparation of a non-aqueous electrolyte of Example 1.

### Example 18

A non-aqueous electrolyte and a lithium secondary battery were manufactured in the same manner as in Example 1, except that a compound represented by Chemical Formula 1-15-1 (Manufacturer: SpectraBase, Product name: 2-amino-6-fluoro-4-oxo-4h-1-benzopyran-3-carboxaldehyde) was used instead of the compound represented by Chemical Formula 1-1-1 in the preparation of a non-aqueous electrolyte of Example 1.

### Example 19

A non-aqueous electrolyte and a lithium secondary battery were manufactured in the same manner as in Example 1, except that a compound represented by Chemical Formula 1-16-1 (Manufacturer: Sigma Aldrich, Product name: 7-hydroxy-8-methyl-3-phenyl-4H-chromen-4-one) was used instead of the compound represented by Chemical Formula 1-1-1 in the preparation of a non-aqueous electrolyte of Example 1.

### Example 20

A non-aqueous electrolyte and a lithium secondary battery were manufactured in the same manner as in Example 1, except that a compound represented by Chemical Formula 1-17-1 (Manufacturer: Sigma Aldrich, Product name: 6,8-dichloro-4-oxo-4H-chromene-3-carbaldehyde) was used instead of the compound represented by Chemical Formula 1-1-1 in the preparation of a non-aqueous electrolyte of Example 1.

### Example 21

A non-aqueous electrolyte and a lithium secondary battery were manufactured in the same manner as in Example 1, except that a compound represented by Chemical Formula 1-18-2 (Manufacturer: Sigma Aldrich, Product name: 6-chloro-7-methyl-4-oxo-4H-chromene-3-carbonitrile) was used instead of the compound represented by Chemical Formula 1-1-1 in the preparation of a non-aqueous electrolyte of Example 1.

### Example 22

A non-aqueous electrolyte and a lithium secondary battery were manufactured in the same manner as in Example 1, except that a compound represented by Chemical Formula 1-19-1 (Manufacturer: Sigma Aldrich, Product name: 6,8-dichloro-4-oxo-4H-chromene-2-carboxylic acid) was used instead of the compound represented by Chemical Formula 1-1-1 in the preparation of a non-aqueous electrolyte of Example 1.

### Example 23

A non-aqueous electrolyte and a lithium secondary battery were manufactured in the same manner as in Example 1, except that a compound represented by Chemical Formula 1-20-3 (Manufacturer: Sigma Aldrich, Product name: 7-methoxy-2-8-dimethyl-3-phenyl-4H-chromen-4-one) was used instead of the compound represented by Chemical Formula 1-1-1 in the preparation of a non-aqueous electrolyte of Example 1.

### Example 24

A non-aqueous electrolyte and a lithium secondary battery were manufactured in the same manner as in Example 1, except that a compound represented by Chemical Formula 1-21-1 (Manufacturer: Sigma Aldrich, Product name: 6,8-dichloro-3-ethyl-2-methyl-4H-chromen-4-one) was used instead of the compound represented by Chemical Formula 1-1-1 in the preparation of a non-aqueous electrolyte of Example 1.

### Example 25

A non-aqueous electrolyte and a lithium secondary battery were manufactured in the same manner as in Example 1, except that a compound represented by Chemical Formula 1-22-1 (Manufacturer: Sigma Aldrich, Product name: 2,5-dimethyl-3-phenoy-7-propoxy-4H-chromen-4-one) was used instead of the compound represented by Chemical Formula 1-1-1 in the preparation of a non-aqueous electrolyte of Example 1.

### Example 26

A non-aqueous electrolyte and a lithium secondary battery were manufactured in the same manner as in Example 1, except that 0.50 parts by weight of the compound represented by Chemical Formula 1-1-1 and 0.50 parts by weight of a compound represented by Chemical Formula 2-3 (Manufacturer: Sigma Aldrich, Product name: 1,3-propane sultone) were used instead of 1.00 part by weight of the compound represented by Chemical Formula 1-1-1 in the preparation of a non-aqueous electrolyte of Example 1.

### Example 27

A non-aqueous electrolyte and a lithium secondary battery were manufactured in the same manner as in Example 1, except that 0.50 parts by weight of the compound represented by Chemical Formula 1-1-1 and 0.50 parts by weight of the compound represented by Chemical Formula 3-3 prepared in Synthesis Example 1 were used instead of 1.00 part by weight of the compound represented by Chemical Formula 1-1-1 in the preparation of a non-aqueous electrolyte of Example 1.

### Example 28

A non-aqueous electrolyte and a lithium secondary battery were manufactured in the same manner as in Example 1, except that 0.50 parts by weight of the compound represented by Chemical Formula 1-1-1 and 0.50 parts by weight of the compound represented by Chemical Formula 4-3 prepared in Synthesis Example 3 were used instead of 1.00 part by weight of the compound represented by Chemical Formula 1-1-1 in the preparation of a non-aqueous electrolyte of Example 1.

### Example 29

A non-aqueous electrolyte and a lithium secondary battery were manufactured in the same manner as in Example 1, except that 0.50 parts by weight of a compound represented by Chemical Formula 1-8-1 and 0.50 parts by weight of a compound represented by Chemical Formula 2-3 (Manufacturer: Sigma Aldrich, Product name: 1,3-propane sultone) were used instead of 1.00 part by weight of the compound represented by Chemical Formula 1-1-1 in the preparation of a non-aqueous electrolyte of Example 1.

### Example 30

A non-aqueous electrolyte and a lithium secondary battery were manufactured in the same manner as in Example 1, except that 0.50 parts by weight of a compound represented by Chemical Formula 1-8-1 and 0.50 parts by weight of the compound represented by Chemical Formula 3-3 prepared in Synthesis Example 1 were used instead of 1.00 part by weight of the compound represented by Chemical Formula 1-1-1 in the preparation of a non-aqueous electrolyte of Example 1.

### Example 31

A non-aqueous electrolyte and a lithium secondary battery were manufactured in the same manner as in Example 1, except that 0.50 parts by weight of a compound represented by Chemical Formula 1-8-1 and 0.50 parts by weight of the compound represented by Chemical Formula 4-3 prepared in Synthesis Example 3 were used instead of 1.00 part by weight of the compound represented by Chemical Formula 1-1-1 in the preparation of a non-aqueous electrolyte of Example 1.

### Comparative Example 1

A non-aqueous electrolyte and a lithium secondary battery were manufactured in the same manner as in Example 1, except that the compound represented by Chemical Formula 1-1-1 was not used in the preparation of a non-aqueous electrolyte of Example 1.

### Comparative Example 2

A non-aqueous electrolyte and a lithium secondary battery were manufactured in the same manner as in Example 1, except that 4H-chromone-4-one was used instead of the compound represented by Chemical Formula 1-1-1 in the preparation of a non-aqueous electrolyte of Example 1.

### Comparative Example 3

A non-aqueous electrolyte and a lithium secondary battery were manufactured in the same manner as in Example 1, except that 6-fluorochromone (Cas 105300-38-7) was used instead of the compound represented by Chemical Formula 1-1-1 in the preparation of a non-aqueous electrolyte of Example 1.

### Comparative Example 4

A non-aqueous electrolyte and a lithium secondary battery were manufactured in the same manner as in Example 1, except that 2-phenyl-4H-chromone-4-one (Cas 525-82-6) was used instead of the compound represented by Chemical Formula 1-1-1 in the preparation of a non-aqueous electrolyte of Example 1.

### Comparative Example 5

A non-aqueous electrolyte and a lithium secondary battery were manufactured in the same manner as in Example 1, except that the compound represented by Chemical Formula 1-1-1 was not used, and 1.00 part by weight of the compound represented by Chemical Formula 2-3 was used in the preparation of a non-aqueous electrolyte of Example 26.

### Comparative Example 6

A non-aqueous electrolyte and a lithium secondary battery were manufactured in the same manner as in Example 1, except that the compound represented by Chemical Formula 1-1-1 was not used, and 1.00 part by weight of a compound represented by Chemical Formula 3-3 was used in the preparation of a non-aqueous electrolyte of Example 26.

### Comparative Example 7

A non-aqueous electrolyte and a lithium secondary battery were manufactured in the same manner as in Example 1, except that the compound represented by Chemical Formula 1-1-1 was not used, and 1.00 part by weight of a compound represented by Chemical Formula 4-3 was used in the preparation of a non-aqueous electrolyte of Example 26.

### Experimental Example 1: Evaluation of amount of gas generated upon activation

The initial volume (hereinafter, referred to as "initial volume (1)") of each lithium secondary battery manufactured in the examples and the comparative examples was measured. Specifically, the lithium secondary battery was placed in a bowl filled with water at 25 °C using Two-pls TWD-150DM equipment, and the initial volume (1) was measured based on Archimedes' principle.

At 45 °C, using a PESCO05-0.5 charger/discharger (Manufacturer: PNE Solution, 5 V, 500 mA), the lithium secondary battery was activated by charging under a constant current-constant voltage (CC-CV) charging condition at a CC of 0.1 C up to 4.60 V, cut-off at a current of 0.05C and discharging under a CC condition up to 2.50 V. Afterward, the lithium secondary battery was placed in a bowl filled with water at 25 °C using Two-pls TWD-150DM equipment, and the volume after activation (hereinafter, referred to as "activation volume") was measured.

The measured initial volume (1) and activation volume were substituted into the following equation to calculate the amount of gas generated upon activation per 1 g of the positive electrode active material (ml; hereinafter, referred to as a "gas amount"), and results thereof are shown in Table 1 below. Amount of gas generated upon activation per 1 g of positive electrode active material (ml/g) = {(Activation volume (ml)) - (Initial volume (1) (ml))} / (Weight of positive electrode active material (g))

### Experimental Example 2: Evaluation of lifespan characteristics

At 45 °C, using a PESCO05-0.5 charger/discharger (Manufacturer: PNE Solution, 5 V, 500 mA), each lithium secondary battery manufactured in the examples and the comparative examples was charged under a CC-CV charging condition at a CC of 0.1 C up to 4.60 V, cut-off at a current of 0.05C and discharged at a CC of 0.33C up to 2.50 V. A cycle of the charging and discharging was repeated twice. Subsequently, full charging was performed at a CC-CV of 0.33C/4.35V, an SOC was adjusted to SOC 50%, discharging was performed at 2.5C for 30 seconds, and initial resistance was calculated based on a difference between the voltage before discharging and the voltage after 10-second discharging. Then, discharging was performed at a CC of 0.33C up to 2.50 V.

Subsequently, degassing was performed, the initially charged and discharged lithium secondary battery was placed in a bowl filled with water at 25 °C using Two-pls TWD-150DM equipment, and the initial volume (hereinafter, referred to as "initial volume (2)") was measured. Afterward, at 45 °C, charging under a CC-CV charging condition at a CC of 0.33C up to 4.35 V, cut-off at a current of 0.05C, resting for 20 minutes and discharging at a CC of 0.33C up to 2.50 V were performed. A cycle of the charging and discharging was repeated 100 times. In this case, the discharge capacity after the first cycle (hereinafter, referred to as "initial discharge capacity") and the discharge capacity after the 100^{th} cycle were measured using a PESCO05-0.5 charger/discharger (Manufacturer: PNE Solution, 5 V, 500 mA), and the measured values were substituted into the following Equation 1 to calculate a 100-cycle discharge capacity retention rate, and results thereof are shown in Table 1 below. 100-cycle discharge capacity retention rate (%) = { (Discharge capacity after 100 cycles) / (Initial discharge capacity)} × 100

In addition, the lithium secondary battery was placed in a bowl filled with water at 25 °C using Two-pls TWD-150DM equipment, and the volume after 100 cycles of charging and discharging (volume after 100 cycles) was substituted into the following Equation 2 to calculate a volume change rate, and results thereof are shown in Table 1 below. 100-cycle volume change rate (%) = [{(Volume after 100 cycles) - (Initial volume (2))} / (Initial volume (2))] × 100

Meanwhile, after 100 cycles were performed, discharging was performed at SOC 50% and 2.5C, and the resistance after 100 cycles was calculated through a difference between discharge voltage and voltage after 10-second discharging. The calculated initial resistance and resistance after 100 cycles were substituted into the following Equation 3 to calculate a 100-cycle resistance increase rate, and results thereof are shown in Table 1 below. 100-cycle resistance increase rate (%) = [{(Resistance after 100 cycles) - (Initial resistance)} / (Initial resistance)] × 100

**[Table 1]**

| Classification | Type of additive | Amount of gas generated upon activation per 1 g of positive electrode active material (ml/g) | 100-cycle discharge capacity retention rate (%) | 100-cycle resistance increase rate (%) | 100-cycle volume change rate (%) |
|---|---|---|---|---|---|
| Example 1 | Chemical Formula 1-1-1 | 0.826 | 94 | 10 | 8 |
| Example 2 | Chemical Formula 1-2-2 | 0.911 | 91 | 12 | 12 |
| Example 3 | Chemical Formula 1-3-1 | 0.902 | 89 | 12 | 12 |
| Example 4 | Chemical Formula 1-4-1 | 0.921 | 90 | 11 | 9 |
| Example 5 | Chemical Formula 1-5-1 | 0.841 | 92 | 10 | 12 |
| Example 6 | Chemical Formula 1-6-2 | 0.916 | 89 | 13 | 12 |
| Example 7 | Chemical Formula 1-7-1 | 0.907 | 89 | 12 | 11 |
| Example 8 | Chemical Formula 1-8-1 | 0.907 | 89 | 12 | 10 |
| Example 9 | Chemical Formula 1-8-3 | 0.884 | 90 | 12 | 10 |
| Example 10 | Chemical Formula 1-9-4 | 0.809 | 94 | 10 | 8 |
| Example 11 | Chemical Formula 1-9-14 | 0.897 | 91 | 11 | 11 |
| Example 12 | Chemical Formula 1-10-5 | 0.821 | 94 | 10 | 8 |
| Example 13 | Chemical Formula 1-10-6 | 0.837 | 94 | 10 | 9 |
| Example 14 | Chemical Formula 1-11-1 | 0.911 | 90 | 12 | 12 |
| Example 15 | Chemical Formula 1-12-1 | 0.908 | 89 | 13 | 11 |
| Example 16 | Chemical Formula 1-13-2 | 0.921 | 88 | 11 | 12 |
| Example 17 | Chemical Formula 1-14-2 | 0.926 | 89 | 11 | 13 |
| Example 18 | Chemical Formula 1-15-1 | 0.914 | 89 | 11 | 13 |
| Example 19 | Chemical Formula 1-16-1 | 0.919 | 90 | 12 | 12 |
| Example 20 | Chemical Formula 1-17-1 | 0.921 | 90 | 13 | 12 |
| Example 21 | Chemical Formula 1-18-2 | 0.841 | 93 | 10 | 8 |
| Example 22 | Chemical Formula 1-19-1 | 0.934 | 88 | 12 | 13 |
| Example 23 | Chemical Formula 1-20-3 | 0.920 | 90 | 12 | 12 |
| Example 24 | Chemical Formula 1-21-1 | 0.931 | 88 | 13 | 12 |
| Example 25 | Chemical Formula 1-22-1 | 0.923 | 89 | 13 | 13 |
| Example 26 | Chemical Formula 1-1-1/Chemical Formula 2-3 | 0.754 | 93 | 8 | 6 |
| Example 27 | Chemical Formula 1-1-1/Chemical Formula 3-3 | 0.746 | 92 | 8 | 6 |
| Example 28 | Chemical Formula 1-1-1/Chemical Formula 4-3 | 0.712 | 94 | 6 | 5 |
| Example 29 | Chemical Formula 1-8-1/Chemical Formula 2-3 | 0.767 | 92 | 8 | 6 |
| Example 30 | Chemical Formula 1-8-1/Chemical Formula 3-3 | 0.736 | 92 | 8 | 6 |
| Example 31 | Chemical Formula 1-8-1/Chemical Formula 4-3 | 0.709 | 94 | 6 | 5 |
| Comparative Example 1 | - | 1.611 | 78 | 20 | 18 |
| Comparative Example 2 | 4H-chromone-4-one | 1.109 | 84 | 17 | 16 |
| Comparative Example 3 | 6-Fluorochromone | 0.987 | 87 | 15 | 14 |
| Comparative Example 4 | 2-Phenyl-4H-chromone-4-one | 1.121 | 83 | 17 | 16 |
| Comparative Example 5 | Chemical Formula 2-3 | 1.458 | 90 | 11 | 12 |
| Comparative Example 6 | Chemical Formula 3-3 | 1.427 | 89 | 12 | 11 |
| Comparative Example 7 | Chemical Formula 4-3 | 1.388 | 91 | 10 | 10 |

Referring to Table 1, Examples 1 to 25 using a compound represented by Chemical Formula 1 as an additive exhibited a significantly small amount of gas generated upon activation, a high 100-cycle discharge capacity retention rate, a low 100-cycle resistance increase rate and a low 100-cycle volume change rate, as compared to Comparative Example 1 not using an additive. Also, Examples 1 to 25 exhibited a significantly small amount of gas generated upon activation, a high 100-cycle discharge capacity retention rate, a low 100-cycle resistance increase rate and a low 100-cycle volume change rate, as compared to Comparative Example 2 using 4-H-chromone-4-one as an additive.

In addition, Examples 1 to 25 exhibited a significantly small amount of gas generated upon activation, a high 100-cycle discharge capacity retention rate, a low 100-cycle resistance increase rate and a low 100-cycle volume change rate, as compared to Comparative Example 3 using 6-fluorochromone as an additive.

Additionally, Examples 1 to 25 exhibited a significantly small amount of gas generated upon activation, a high 100-cycle discharge capacity retention rate, a low 100-cycle resistance increase rate and a low 100-cycle volume change rate, as compared to Comparative Example 4 using 2-phenyl-4H-chromone-4-one as an additive.

In addition, Examples 26 and 29 using a compound represented by Chemical Formula 1 and a compound represented by Chemical Formula 2 as additives exhibited a significantly small amount of gas generated upon activation, a high 100-cycle discharge capacity retention rate, a low 100-cycle resistance increase rate and a low 100-cycle volume change rate, as compared to Comparative Example 5 not using a compound represented by Chemical Formula 1 and using a compound represented by Chemical Formula 2 as an additive.

Additionally, Examples 27 and 30 using a compound represented by Chemical Formula 1 and a compound represented by Chemical Formula 3 as additives exhibited a significantly small amount of gas generated upon activation, a high 100-cycle discharge capacity retention rate, a low 100-cycle resistance increase rate and a low 100-cycle volume change rate, as compared to Comparative Example 6 not using a compound represented by Chemical Formula 1 and using a compound represented by Chemical Formula 3 as an additive.

In addition, Examples 28 and 31 using a compound represented by Chemical Formula 1 and a compound represented by Chemical Formula 3 as additives exhibited a significantly small amount of gas generated upon activation, a high 100-cycle discharge capacity retention rate, a low 100-cycle resistance increase rate and a low 100-cycle volume change rate, as compared to Comparative Example 7 not using a compound represented by Chemical Formula 1 and using a compound represented by Chemical Formula 4 as an additive.

## Claims

1. A non-aqueous electrolyte for a lithium secondary battery, comprising a first additive including a compound represented by the following Chemical Formula 1: 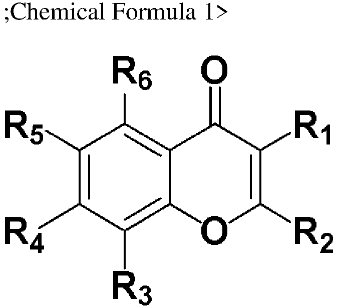 in Chemical Formula 1,
R₁ and R₃ to R₆ are the same or different and each independently represent hydrogen, a halogen, *-L₁-C≡N, *-L₂-C(=O)R₇, *-L₃-NR₈R₉, *-L₄-OR₁₀, a C₁ to C₂₀ alkyl group, a C₂ to C₂₀ alkynyl group or a C₆ to C₂₀ aryl group,
R₂ represents hydrogen, a halogen, *-L₅-C≡N, *-L₆-C(=O)R₁₁, *-L₇-NR₁₂R₁₃, *-L₈-OR₁₄, a C₁ to C₂₀ alkyl group or a C₂ to C₂₀ alkynyl group,
R₇ to R₁₄ are the same or different and each independently represent hydrogen, oxygen, *-L₉-OR₁₅, a C₁ to C₂₀ alkyl group, a C₂ to C₂₀ alkynyl group or a C₆ to C₂₀ aryl group,
R₁₅ represents hydrogen, a C₁ to C₂₀ alkyl group, a C₂ to C₂₀ alkynyl group or a C₆ to C₂₀ aryl group, and
L₁ to L₉ are the same or different and each independently represent a direct bond or a C₁ to C₁₀ alkylene group,
provided that R₁ to R₆ are not hydrogen at the same time; or one or more of R₁ to R₆ are halogens, and the remainder of R₁ to R₆ are not hydrogen at the same time.

2. The non-aqueous electrolyte for a lithium secondary battery according to claim 1, wherein the compound represented by Chemical Formula 1 includes one or more of compounds represented by the following Chemical Formulas 1-1 to 1-22: 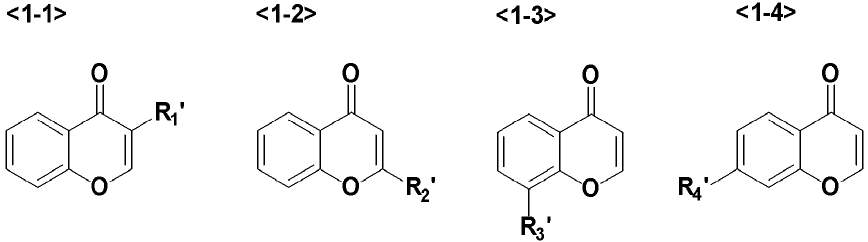 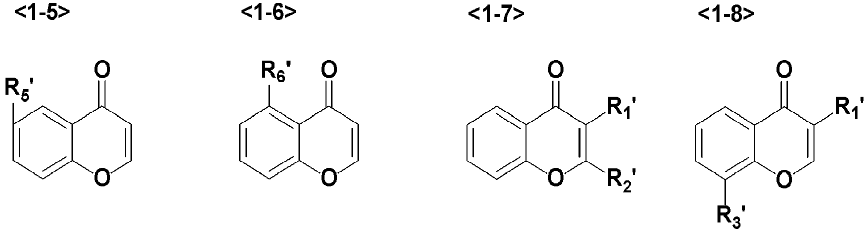 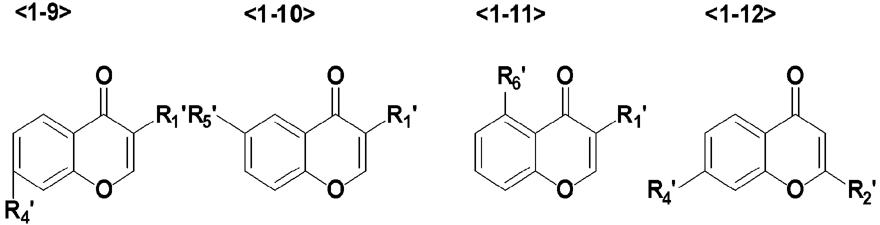 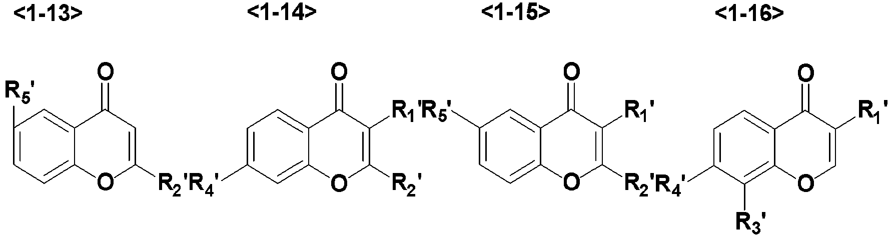 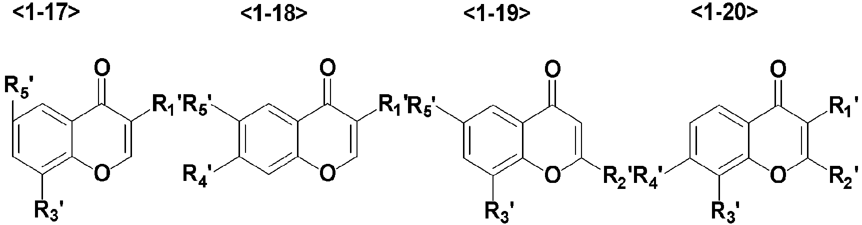 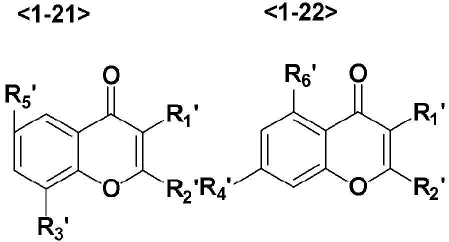 in Chemical Formulas 1-1 to 1-22,
R₁' and R₃' to R₆' are the same or different and each independently represent a halogen, *-L₁'-C≡N, *-L₂'-C(=O)R₇', *-L₃'-NR₈'R₉', *-L₄'-OR₁₀', a C₁ to C₂₀ alkyl group, a C₂ to C₂₀ alkynyl group or a C₆ to C₂₀ aryl group,
R₂' represents a halogen, *-L₅'-C≡N, *-L₆'-C(=O)R₁₁', *-L₇'-NR₁₂'R₁₃', *-L₈'-OR₁₄', a C₁ to C₂₀ alkyl group or a C₂ to C₂₀ alkynyl group,
R₇' to R₁₄' are the same or different and each independently represent hydrogen, oxygen, *-L₉'-OR₁₅', a C₁ to C₂₀ alkyl group, a C₂ to C₂₀ alkynyl group or a C₆ to C₂₀ aryl group,
R₁₅' represents hydrogen, a C₁ to C₂₀ alkyl group, a C₂ to C₂₀ alkynyl group or a C₆ to C₂₀ aryl group, and
L₁' to L₉' are the same or different and each independently represent a direct bond or a C₁ to C₁₀ alkylene group.

3. The non-aqueous electrolyte for a lithium secondary battery according to claim 1, wherein the compound represented by Chemical Formula 1 includes one or more of compounds represented by the following chemical formulas:

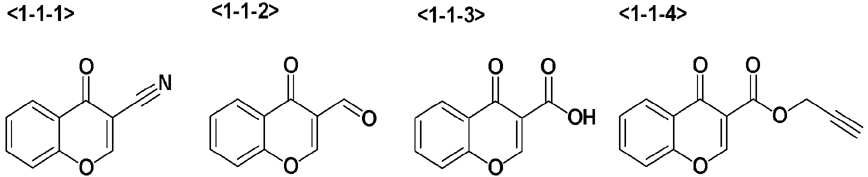

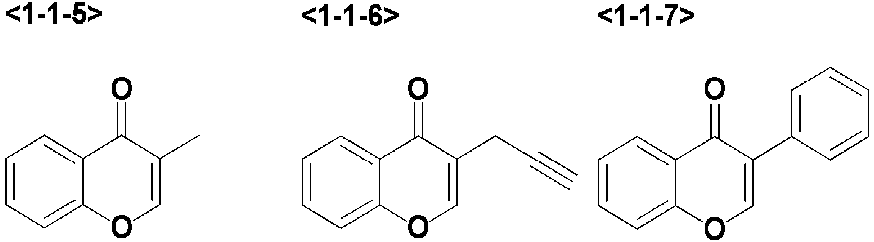

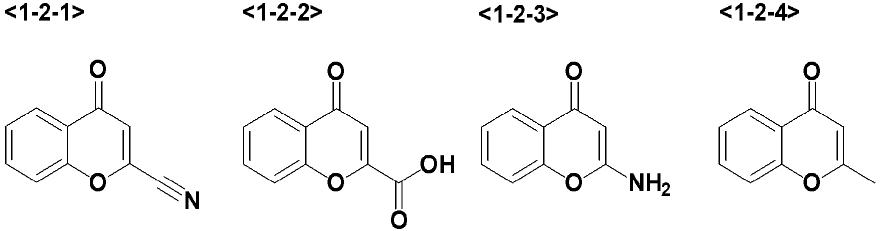

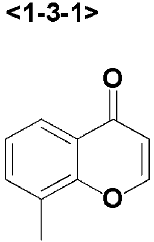

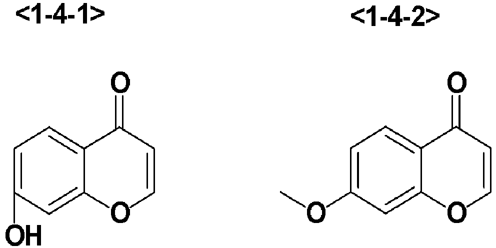

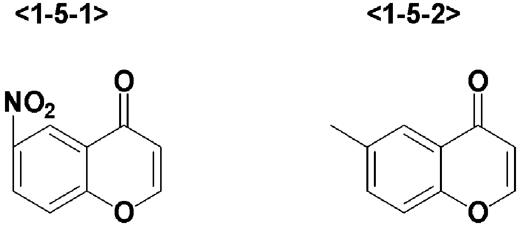

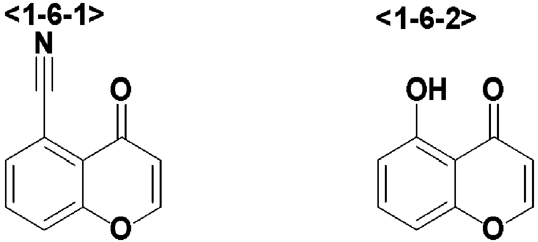

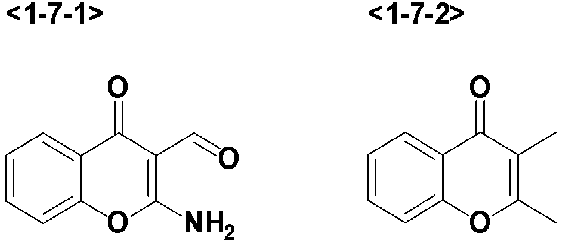

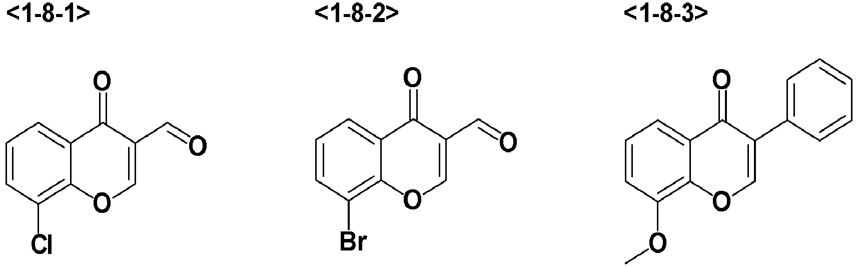

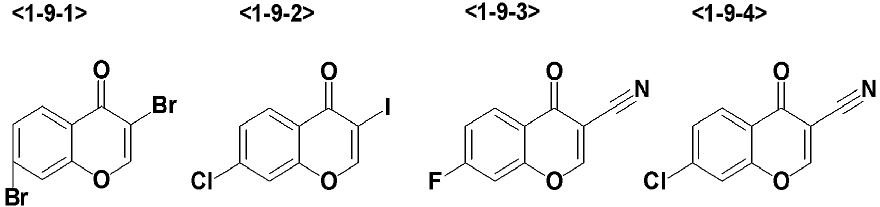

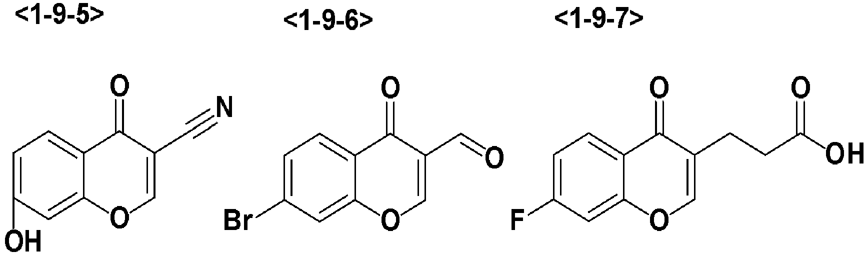

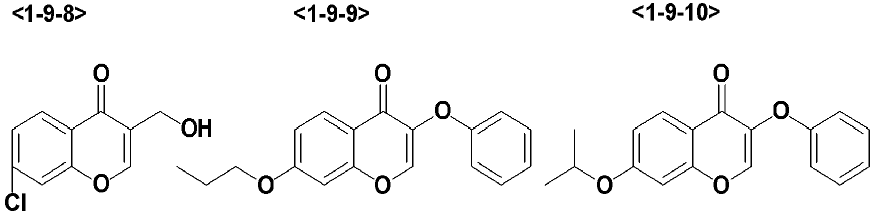

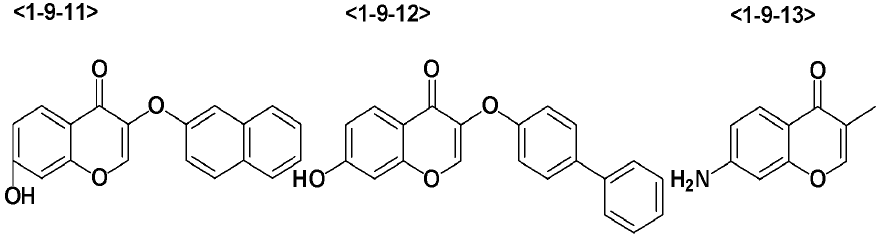

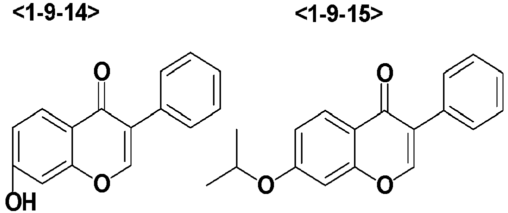

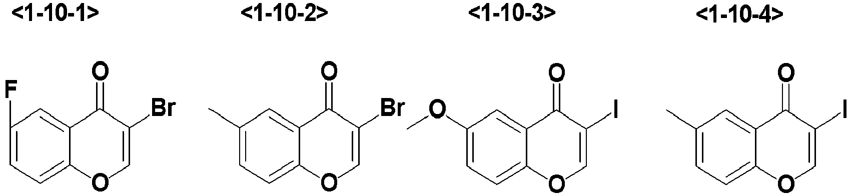

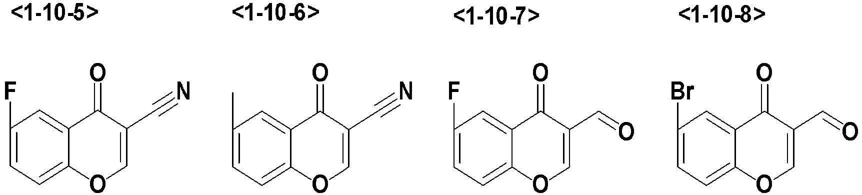

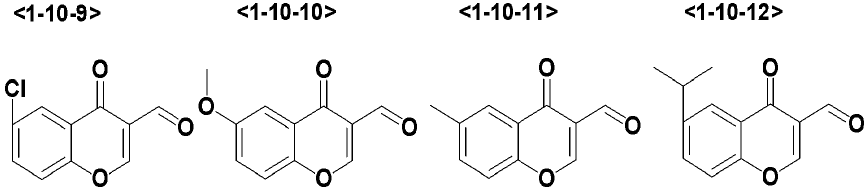

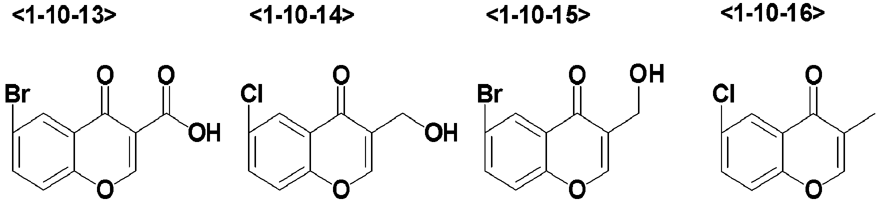

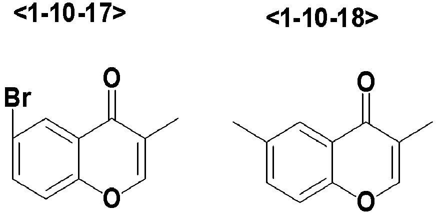

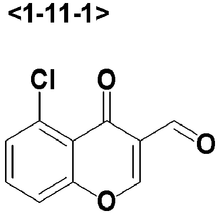

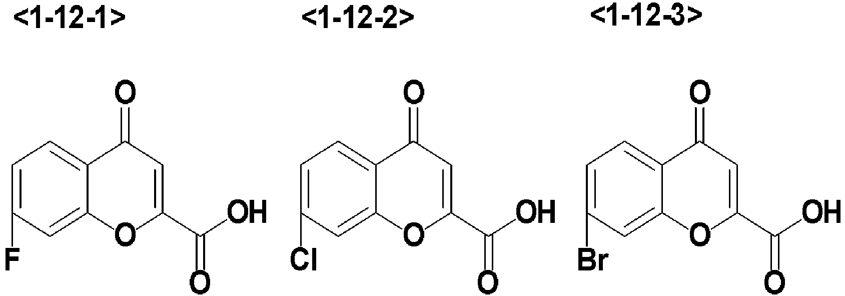

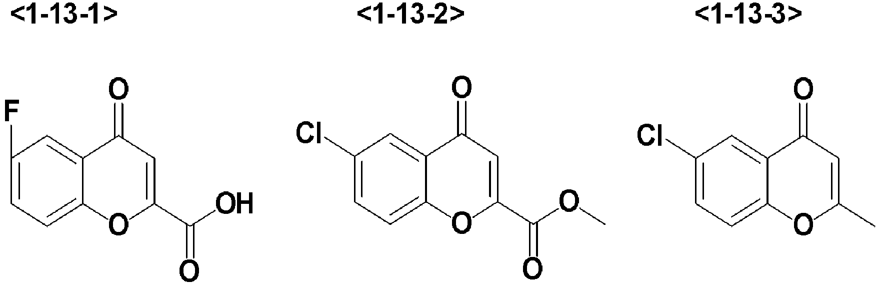

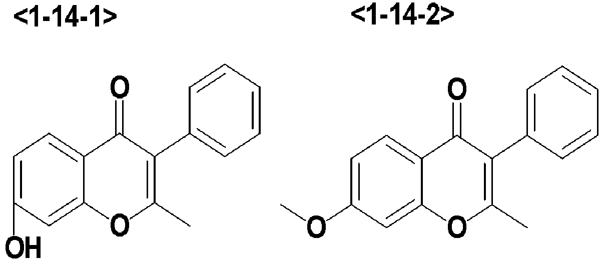

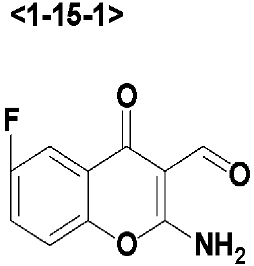

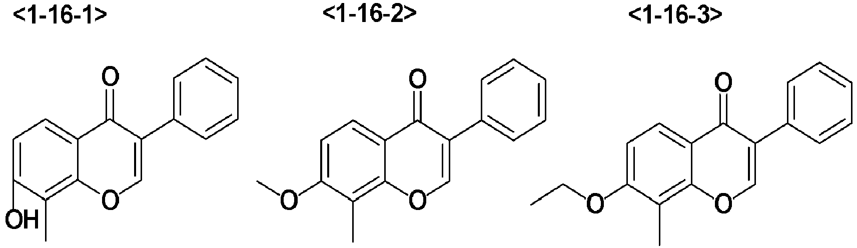

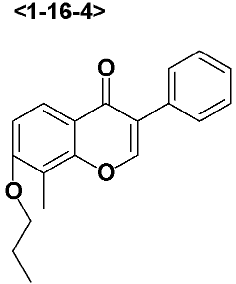

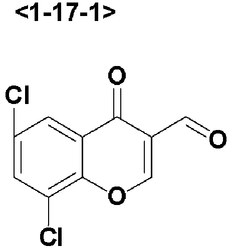

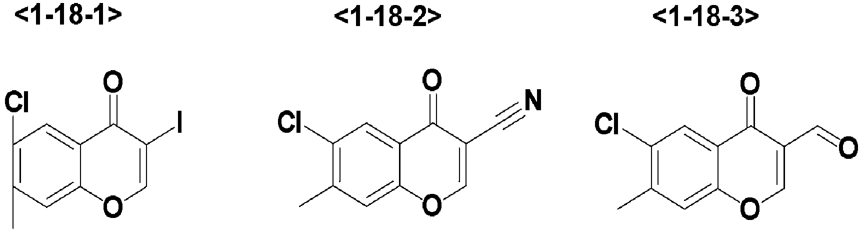

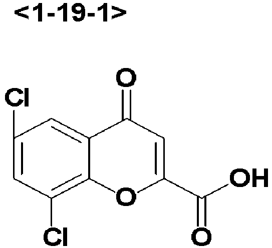

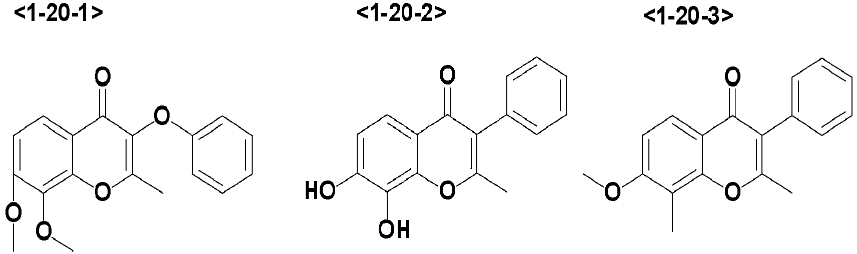

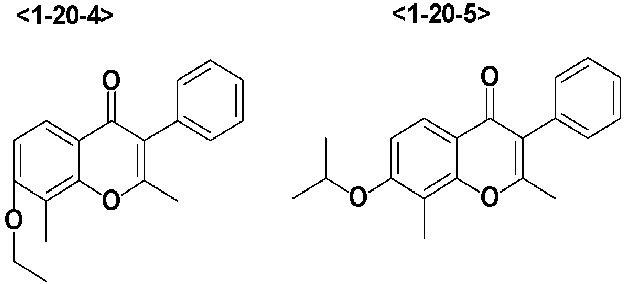

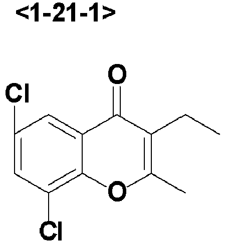

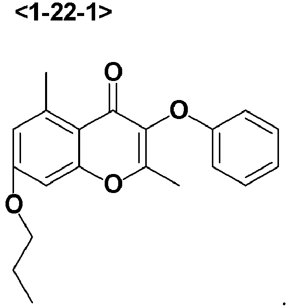

4. The non-aqueous electrolyte for a lithium secondary battery according to claim 1, wherein the compound represented by Chemical Formula 1 is included in an amount of 0.01 to 10.00 parts by weight with respect to 100 parts by weight of the non-aqueous electrolyte for a lithium secondary battery.

5. The non-aqueous electrolyte for a lithium secondary battery according to claim 1, comprising a second additive including one or more of compounds represented by the following Chemical Formulas 2 to 4: 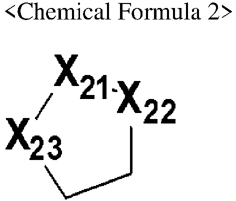 in Chemical Formula 2,
X₂₁ represents *-S(=O)-* or *-S(=O)₂-*, and
X₂₂ and X₂₃ are the same or different and each independently represent a direct bond, *-O-* or a C₁ to C₁₀ alkylene group, 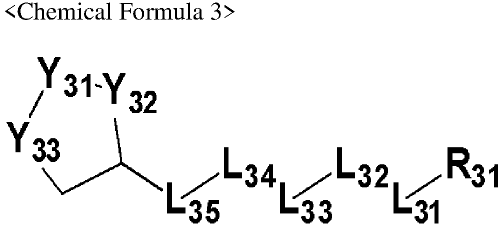
in Chemical Formula 3,
Y₃₁ and L₃₃ are the same or different and each independently represent *-S(=O)-* or *-S(=O)₂-*,
Y₃₂, Y₃₃, L₃₁, L₃₂, L₃₄ and L₃₅ are the same or different and each independently represent a direct bond, *-O-* or a C₁ to C₁₀ alkylene group, and
R₃₁ represents hydrogen, a C₁ to C₁₀ alkyl group, a C₂ to C₁₀ alkenylene group or a C₂ to C₁₀ alkynylene group, 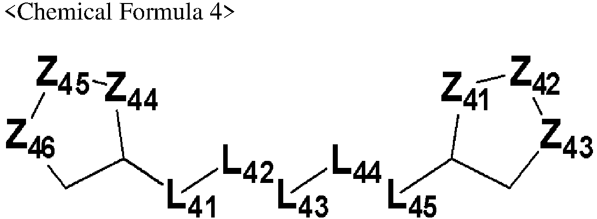
in Chemical Formula 4,
Z₄₂, Z₄₅ and L₄₃ are the same or different and each independently represent *-S(=O)-* or *-S(=O)₂-*, and
Z₄₁, Z₄₃, Z₄₄, Z₄₆, L₄₁, L₄₂, L₄₄ and L₄₅ are the same or different and each independently represent a direct bond, *-O-* or a C₁ to C₁₀ alkylene group.

6. The non-aqueous electrolyte for a lithium secondary battery according to claim 5, wherein the compound represented by Chemical Formula 2 includes one or more of compounds represented by the following Chemical Formulas 2-1 to 2-4,
the compound represented by Chemical Formula 3 includes one or more of compounds represented by the following Chemical Formulas 3-1 to 3-3, and
the compound represented by Chemical Formula 4 includes one or more of compounds represented by the following Chemical Formulas 4-1 to 4-3:

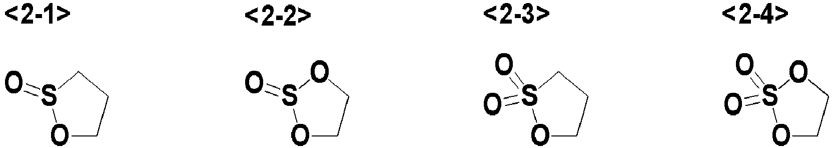

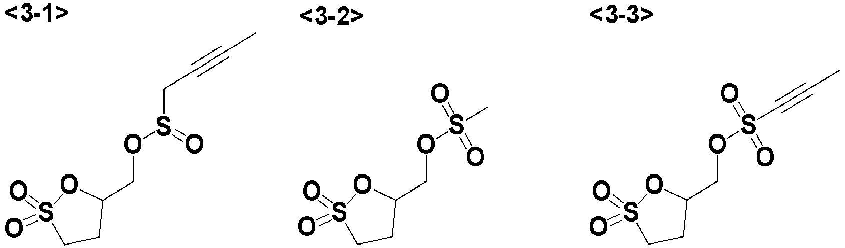

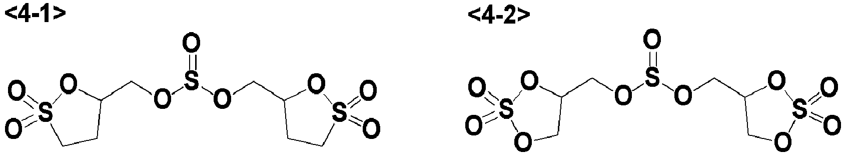

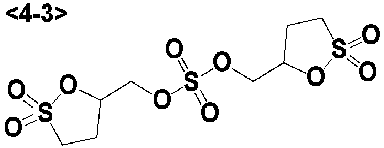

7. The non-aqueous electrolyte for a lithium secondary battery according to claim 5, wherein the second additive is included in an amount of 0.01 to 5.00 parts by weight with respect to 100 parts by weight of the non-aqueous electrolyte for a lithium secondary battery.

8. The non-aqueous electrolyte for a lithium secondary battery according to claim 1, wherein the non-aqueous electrolyte for a lithium secondary battery includes one or more of a lithium salt and an organic solvent.

9. A lithium secondary battery comprising:
the non-aqueous electrolyte for a lithium secondary battery according to claim 1;
a positive electrode including a positive electrode active material;
a negative electrode including a negative electrode active material; and
a separator interposed between the positive electrode and the negative electrode.

10. The lithium secondary battery of claim 9, wherein the positive electrode active material includes one or more of an over-lithiated layered oxide represented by the following Chemical Formula 5 and an NCM-based lithium composite transition metal oxide represented by Chemical Formula 6:
<Chemical Formula 5> xLi₂MnO₃·(1-x)Liₐ₁Ni_{b1}Co_{c1}Mn_{d1}M¹ₑ₁O₂
in Chemical Formula 5,
0<x<1, 0≤a1≤2, 0≤b1≤1, 0≤c1≤1, 0≤d1≤1, 0≤e1≤1 and a1+b1+c1+d1+e1=2 are satisfied, and
M¹ includes one or more of Na, K, Mg, Al, Fe, Cr, Y, Sn, Ti, B, P, Zr, Ru, Nb, W, Ba, Sr, La, Ga, Gd, Sm, Ca, Ce, Ta, Mo, Sc, V, Zn, Cu, In, S, Bi, Rh, Pd, Ag, Cd and Tc,
<Chemical Formula 6> Liₐ₂Ni_{b2}Co_{c2}Mn_{d2} M²ₑ₂O₂
in Chemical Formula 6,
0.9≤a2≤1.1, 0.7≤b2<1, 0≤c2<1, 0<d2<1, 0≤e2<1 and b2+c2+d2+e2=1 are satisfied, and
M² includes one or more of Na, K, Mg, Al, Fe, Cr, Y, Sn, Ti, B, P, Zr, Ru, Nb, W, Ba, Sr, La, Ga, Gd, Sm, Ca, Ce, Ta, Mo, Sc, V, Zn, Cu, In, S, Bi, Rh, Pd, Ag, Cd and Tc.
